# EUROPEAN PATENT APPLICATION

(11) **EP 4 693 740 A1**
(43) Date of publication of application: **11.02.2026**
(21) Application number: 24797402.5
(22) Date of filing: 24.04.2024
(51) Int. Cl.: H01Q 3/00, H01Q 1/24, H04M 1/02, G06F 3/04817

(54) **ELECTRONIC DEVICE INCLUDING SATELLITE COMMUNICATION ANTENNA, AND OPERATION METHOD THEREOF**

(30) Priority: 24.04.2023 KR 20230053383; 25.10.2023 KR 20230144063
(71) Applicant: Samsung Electronics Co., Ltd., Suwon-si, Gyeonggi-do 16677 (KR)
(72) Inventor: KIM, Youngsik, Suwon-si, Gyeonggi-do 16677 (KR); KIM, Dongyeon, Suwon-si, Gyeonggi-do 16677 (KR); GHIM, Jaegon, Suwon-si, Gyeonggi-do 16677 (KR); JEON, Minhwan, Suwon-si, Gyeonggi-do 16677 (KR); CHO, Youngsang, Suwon-si, Gyeonggi-do 16677 (KR); CHAE, Dongwon, Suwon-si, Gyeonggi-do 16677 (KR)
(74) Representative: HGF
(86) International application number: PCT/KR2024/005533
(87) International publication number: WO 2024/225747

(57) **Abstract**

A foldable electronic device according to the present disclosure causes a processor, when executed, to: identify an angle between a first housing and a second housing through at least one sensor; identify a radiation direction of an antenna depending on the angle the first and second housings from information stored in a memory; identify an orientation of the foldable electronic device through at least one sensor; display, through a first display or a second display, an UI for prompting a user to adjust the orientation of the foldable electronic device so that a radiation direction is directed to a satellite on the basis of the radiation direction of the antenna and the orientation of the foldable electronic device.

## Description

### [Technical Field]

The disclosure relates to an electronic device including a satellite communication antenna and an operation method thereof.

### [Background Art]

Electronic devices may include satellite communication antennas.

The above-described information may be provided as related art to aid in understanding the disclosure. No claim or determination is made as to whether any of the above is applicable as prior art related to the disclosure.

### [Disclosure of Invention]

### [Technical Problem]

When the state (e.g., shape) of an electronic device changes, the electromagnetic influence on the satellite communication antenna changes, which may cause the user to experience a degradation in radio transmission and reception performance.

Various embodiments of the disclosure provide an electronic device including a satellite communication antenna for securing radio transmission and reception performance, and an operation method thereof. Various embodiments of the disclosure are provided to address or at least alleviate the above-mentioned problems.

The technical problems to be solved in the disclosure are not limited to the technical problems mentioned above, and other technical problems not mentioned will be apparent to those skilled in the art to which the disclosure pertains from the description below.

### [Solution to Problem]

According to an exemplary embodiment of the disclosure, a foldable electronic device is provided, and the foldable electronic device includes a foldable housing, a first display, a second display, an antenna, a wireless communication circuit, a memory, at least one sensor, and a processor. The foldable housing includes a first housing and a second housing that are hingedly connected. The first display and the second display are disposed on opposite sides of the foldable housing relative to each other. The wireless communication circuit is configured to communicate with a satellite through the antenna. The memory stores instructions that, when executed, cause the processor to identify an angle between the first housing and the second housing through at least one sensor. The memory stores an instruction that, when executed, causes the processor to identify a radiation direction of the antenna depending on the angle between the first and second housings from information stored in the memory. The memory stores an instruction that, when executed, causes the processor to identify an orientation of the foldable electronic device through at least one sensor. The memory stores an instruction that, when executed, causes the processor to display, through the first display or the second display, a UI that prompts the user to adjust the orientation of the foldable electronic device so that the radiation direction is oriented toward the satellite, based on the radiation direction of the antenna and the orientation of the foldable electronic device.

According to an exemplary embodiment of the disclosure, an electronic device is provided, and the electronic device includes an antenna, a wireless communication circuit, a memory, at least one sensor, at least one display, and a processor. The wireless communication circuit is configured to communicate with a satellite through the antenna. The memory stores an instruction that, when executed, causes the processor to identify a variable state (also referred to as a transformation pattern) of the electronic device through the at least one sensor. The memory stores an instruction that, when executed, causes the processor to identify the radiation direction of the antenna depending on the variable state of the electronic device from information stored in the memory. The memory stores an instruction that, when executed, causes the processor to identify the orientation of the electronic device through the at least one sensor. The memory stores an instruction that, when executed, causes the processor to display, through at least one display, a UI that prompts the user to adjust the orientation of the electronic device, based on the radiation direction of the antenna and the orientation of the electronic device, so that the radiation direction of the antenna is oriented toward the satellite.

### [Advantageous Effects of Invention]

An electronic device including a satellite communication antenna according to exemplary embodiments of the disclosure and an operating method thereof can ensure the reliability of the electronic device for satellite communication by inducing a user to adjust the transformation pattern or orientation (or posture) of the electronic device in order to smoothly transmit and receive radio waves through a radiation pattern (or radiation direction) that changes when the electronic device is deformed.

In addition, effects obtainable or expected from various embodiments of the disclosure will be directly or implicitly disclosed in the detailed description of the embodiments of the disclosure.

### [Brief Description of Drawings]

The above and other aspects, features, and advantages of specific embodiments of the disclosure will become more apparent from the following detailed description in conjunction with the accompanying drawings.
FIG. 1 is a block diagram of an electronic device in a network environment according to an embodiment of the disclosure.
FIG. 2 is a diagram illustrating configurations of a foldable electronic device in an unfolded state according to an embodiment of the disclosure.
FIG. 3 is a diagram illustrating configurations of a foldable electronic device in a folded state according to an embodiment of the disclosure.
FIG. 4 is a cross-sectional view of a foldable electronic device taken along line D-D' in FIG. 2 according to an embodiment of the disclosure.
FIG. 5 is a diagram illustrating a portion of a foldable electronic device according to an embodiment of the disclosure.
FIG. 6 is a diagram illustrating a foldable electronic device in an unfolded state, a three-dimensional diagram illustrating a radiation pattern of a satellite communication antenna in the unfolded state of the foldable electronic device, and a two-dimensional diagram illustrating a radiation pattern of the satellite communication antenna in the unfolded state of the foldable electronic device according to an embodiment of the disclosure.
FIG. 7 is a diagram illustrating a foldable electronic device in a folded state, a three-dimensional diagram illustrating a radiation pattern of a satellite communication antenna in the folded state of the foldable electronic device, and a two-dimensional diagram illustrating a radiation pattern of the satellite communication antenna in the folded state of the foldable electronic device according to an embodiment of the disclosure.
FIG. 8 shows graphs illustrating antenna radiation performance of a foldable electronic device in unfolded and folded states, with the orientation or posture of the foldable electronic device fixed, according to an embodiment of the disclosure.
FIG. 9 shows a perspective view of a multi-foldable electronic device in a folded state and a perspective view of a multi-foldable electronic device in an intermediate state according to an embodiment of the disclosure.
FIG. 10 illustrates a slidable electronic device with a reduced screen, a slidable electronic device with an expanded screen, a cross-sectional view of the slidable electronic device having the reduced screen taken along line F-F', and a cross-sectional view of the slidable electronic device having the expanded screen taken along line F-F' according to an embodiment of the disclosure.
FIG. 11 is a block diagram of an electronic device according to an embodiment of the disclosure.
FIG. 12 illustrates an operational flow of the electronic device in FIG. 11 according to an embodiment of the disclosure.
FIG. 13 illustrates a screen of an electronic device in relation to the operational flow in FIG. 12 according to an embodiment of the disclosure.
FIG. 14 illustrates an operational flow of operation 1207 in the operational flow shown in FIG. 12 in a foldable electronic device according to an embodiment of the disclosure.
FIG. 15 illustrates a screen of a foldable electronic device according to an embodiment of the disclosure.
FIG. 16 illustrates a screen of a foldable electronic device according to an embodiment of the disclosure.

### [Mode for the Invention]

Hereinafter, various example embodiments of the disclosure disclosed herein will be described in greater detail with reference to the accompanying drawings.

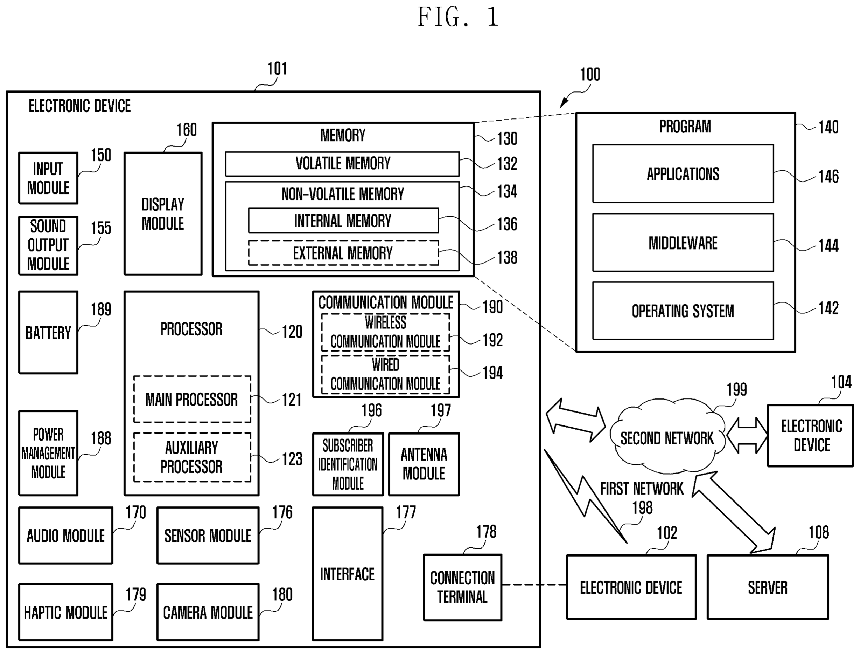

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

According to an embodiment, the electronic device 101 in FIG. 1 may be implemented as a variable electronic device whose state (e.g., shape) is capable of changing. The electronic device may include, for example, a foldable electronic device, a slidable electronic device, a stretchable electronic device, or a rollable electronic device. Foldable electronic devices may be implemented as a type whose screen can be folded once or a type whose screen can be folded at least twice (e.g., a multi-foldable type).

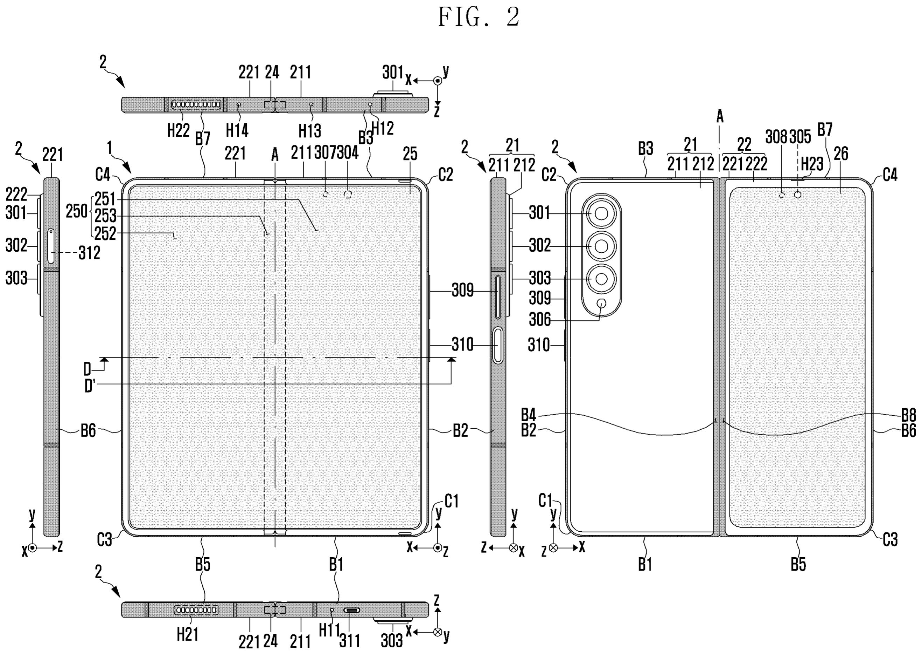

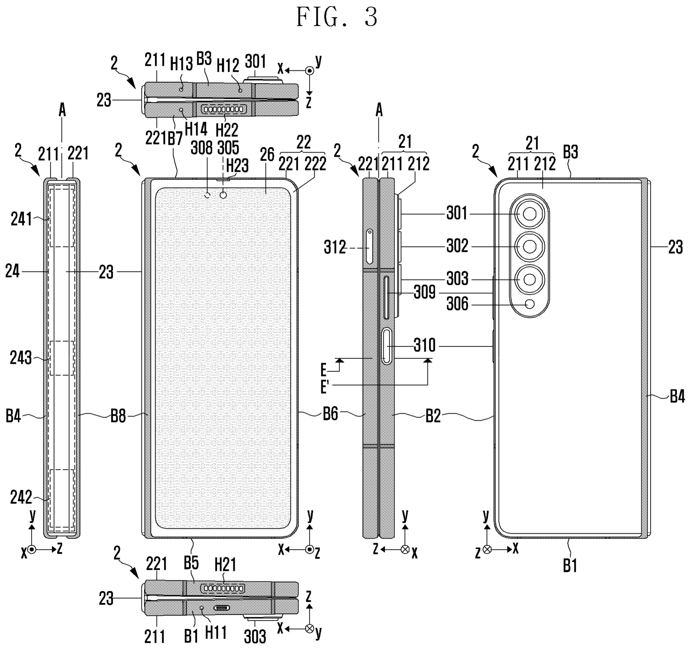

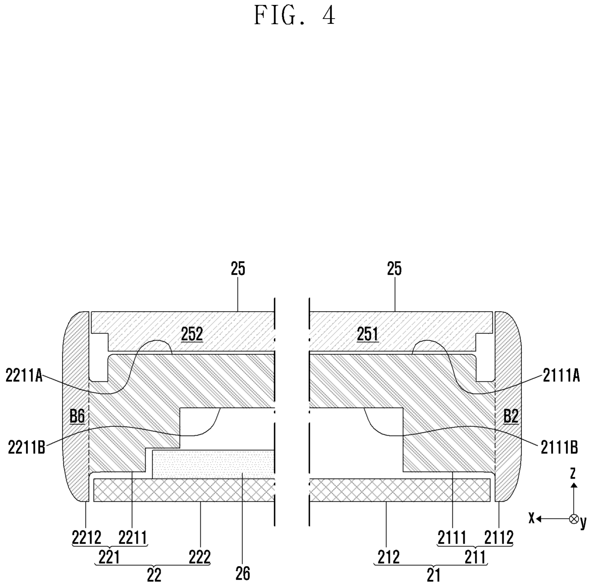

FIG. 2 is a diagram illustrating configurations of a foldable electronic device 2 in an unfolded state (also referred to as a flat state) according to an embodiment of the disclosure. FIG. 3 is a diagram illustrating configurations of foldable electronic device 2 in a folded state (also referred to as a folding state) according to an embodiment of the disclosure. FIG. 4 is a cross-sectional view of a foldable electronic device 2 taken along line D-D' in FIG. 2 according to an embodiment of the disclosure. It should be understood that the disclosure implements and encompasses all combinations of the features and/or embodiments disclosed in relation to FIGS. 1, 2, 3, and 4. That is, all combinations of the features described below in relation to FIGS. 1, 2, 3, and 4 should be considered to be included in the disclosure as specific examples.

Referring to FIGS. 2, 3, and 4, the foldable electronic device 2 may include a foldable housing 20, a first display module 25, a second display module 26, a first camera module 301, a second camera module 302, a third camera module 303, a fourth camera module 304, a fifth camera module 305, a light-emitting module 306, a sensor module 307, a first audio input module (not shown separately), a second audio input module (not shown separately), a third audio input module (not shown separately), a fourth audio input module (not shown separately), a first audio output module (not shown separately), a second audio output module (not shown separately), a third audio output module (not shown separately), a key input module, a first connection terminal 311, and/or a second connection terminal 312.

According to an embodiment, the unfolded state and folded state of the foldable electronic device 2 may be substantially provided by the foldable housing 20. The "unfolded state of the foldable electronic device 2" and the "unfolded state of the foldable housing 20" described in the disclosure may be interpreted as being substantially the same. The "folded state of the foldable electronic device 2" and the "folded state of the foldable housing 20" described in the disclosure may be interpreted as being substantially the same.

According to an embodiment, the foldable housing 20 may include a first housing (also referred to as a first housing portion or a first housing structure) 21, a second housing (also referred to as a second housing portion or a second housing structure) 22, a hinge housing 23, and/or a hinge portion 24. The first housing 21 and the second housing 22 may be connected via the hinge portion 24. The first housing 21 and the second housing 22 may be rotatable relative to each other with respect to the hinge portion 24. The hinge portion 24 may include, for example, one or more hinge modules (also referred to as hinge assemblies) (e.g., a first hinge module 241, a second hinge module 242, and/or a third hinge module 243).

According to an embodiment, the first display module (also referred to as a first display) 25 may be disposed in the foldable housing 20. The first display module 25 may include, for example, a flexible display module (also referred to as a flexible display) or a foldable display module (also referred to as a foldable display) capable of being deformed in response to transition (also referred to as a transformation) between an unfolded state and a folded state of the foldable electronic device 2.

According to an embodiment, the first display module 25 may include a display area 250. The display area 250 may include an active area or screen area capable of displaying images, based on electrical signals. The display area 250 may include a first display area 251 corresponding to the first housing 21, a second display area 252 corresponding to the second housing 22, and a third display area 253 corresponding to the hinge portion 24. The third display area 253 may expand the first display area 251 and the second display area 252.

According to an embodiment, the first display area 251 may be disposed in the first housing 21. The shape of the first display area 251 may be maintained by the support of the first housing 21. For example, the first display area 251 may be supported by the first housing 21 to be provided (or formed) to be substantially flat.

According to an embodiment, the second display area 252 may be disposed in the second housing 22. The shape of the second display area 252 may be maintained by the support of the second housing 22. For example, the second display area 252 may be supported by the second housing 21 to be provided (or formed) to be substantially flat.

According to an embodiment, the third display area 253 may be positioned to correspond to the hinge portion 24. When the foldable electronic device 2 transitions between the unfolded state and the folded state, the third display area 253 may be deformed in response to the relative position between the first display area 251 and the second display area 252. In the unfolded state of the foldable electronic device 2, the third display area 253 may be arranged substantially flat. In the folded state of the foldable electronic device 2, the third display area 253 may be arranged in a bent state. The unfolded state of the foldable electronic device 2 may be defined or interpreted as a state in which the third display area 253 is arranged to be flat. The folded state of the foldable electronic device 2 may be defined or interpreted as a state in which the third display area 253 is arranged in a bent shape.

According to an embodiment, in the unfolded state of the foldable electronic device 2, the first display area 251 and the second display area 252 may form an angle of approximately 180 degrees, and the display area 250 may be provided (or arranged) in a substantially flat state. Due to the relative positions between the first display area 251 disposed in the first housing 21 and the second display area 252 disposed in the second housing 22 in the unfolded state of the foldable electronic device 2, the third display area 253 can be arranged to be flat. In the unfolded state of the foldable electronic device 2, the third display area 253 may be pulled from both sides by the first display area 251 and the second display area 252, and the pulling force may be provided to reduce damage to the third display area 253 while arranging the third display area 253 to be flat. The third display area 253 may be provided (or formed) with an expanded width so as to be pulled by the first display area 251 and the second display area 252 and arranged to be flat while reducing stress in the unfolded state of the foldable electronic device 2.

According to an embodiment, the first display module 25 may substantially provide (or form) the front face of the exterior of the foldable electronic device 2. The front face of the foldable electronic device 2 may include a first front area provided (or formed) by the first display area 251, a second front area provided (or formed) by the second display area 252, and a third front area provided (or formed) by the third display area 253. The coordinate axes of the foldable electronic device 2 are illustrated based on, for example, the first housing 21, and the +z-axis direction may be defined or interpreted as the direction in which the substantially flat first front area faces. For example, the first front area provided (or formed) by the first display area 251 may be substantially parallel to the x-y plane. In the unfolded state of the foldable electronic device 2, the front face of the foldable electronic device 2 may be provided (or formed) as a substantially flat surface.

According to an embodiment, in the unfolded state of the foldable electronic device 2, the hinge portion 24 may support the third display area 253 of the first display module 25 in a substantially flat manner. The hinge portion 24 may support the third display area 253 so that the third display area 253 is arranged to be flat without sagging or with reduced sagging in the unfolded state of the foldable electronic device 2, thereby reducing a crease phenomenon.

According to an embodiment, when an external force (e.g., external pressure such as a touch input using a user's finger or a touch input using an electronic pen) is applied to the third display area 253 in the unfolded state of the foldable electronic device 2, the hinge portion 24 may support the third display area 253 so that the third display area 253 may be maintained flat while reducing a sagging phenomenon of the third display area 253.

According to an embodiment, when an external impact, such as a drop, is applied to the foldable electronic device 2 in the unfolded state, the hinge portion 24 may be configured to reduce or absorb the external impact so as to reduce the influence of the external impact on the third display area 253.

According to an embodiment, the foldable electronic device 2 may be implemented in an in-folding manner in which the display area 250 of the first display module 25 (or the front face of the foldable electronic device 2 where the display area 250 is visually viewed) may be folded inward. FIG. 3 illustrates a fully folded state of the foldable electronic device 2 in which the first housing 21 and the second housing 22 are disposed so that they are no longer close to each other. In the fully folded state of the foldable electronic device 2, the first display area 251 and the second display area 252 (or the first front area and the second front area) may face each other. For example, in the fully folded state of the foldable electronic device 2, the angle between the first housing 21 and the second housing 22 (or the angle between the first display area 251 and the second display area 252, or the angle between the first front area and the second front area) may be between about 0 degrees to about 10 degrees. In the fully folded state of the foldable electronic device 2, the display area 250 may be substantially invisible.

Although not illustrated separately, the foldable electronic device 2 may be arranged in an intermediate state between the unfolded state and the fully folded state. For example, in the intermediate state of the foldable electronic device 2 in which the angle between the first housing 21 and the second housing 22 is greater than or equal to a predetermined angle, the foldable electronic device 2 may be configured to provide a user environment in which the user may utilize the display area 250.

Hereinafter, the "folded state of the foldable electronic device 2" in the disclosure may refer to a fully folded state, as opposed to the intermediate state.

According to an embodiment, referring to the unfolded state of the foldable electronic device 2, the display area 250 of the first display module 25 may be provided (or formed) in a symmetrical shape with respect to the center line A of the foldable electronic device 2. The center line A of the foldable electronic device 2, based on the unfolded state of the foldable electronic device 2, may correspond to the middle of the width of the third display area 253 extending from the first boundary between the first display area 251 and the third display area 253 to the second boundary between the second display area 251 and the third display area 253. For example, the illustrated +x coordinate axis may be substantially perpendicular to the center line A, and the illustrated +y coordinate axis may be substantially parallel to the center line A.

According to various embodiments, the center line A of the foldable electronic device 2 may be defined or interpreted as a "folding axis" of the foldable housing 20 or the foldable electronic device 2. The folding axis may be substantially provided (or formed) by the hinge portion 24.

According to an embodiment, the third display area 253 arranged in a bent shape in the folded state of the foldable electronic device 2 may be provided (or formed) in a substantially symmetrical shape with respect to the center line A of the foldable electronic device 2.

According to an embodiment, referring to the unfolded state of the foldable electronic device 2, the display area 250 of the first display module 25 may be substantially rectangular.

According to an embodiment, the first housing 21 may include a first frame (also referred to as a first frame structure or a first framework) 211 and a first cover 212 disposed on (or coupled to) the first frame 211. The combination of the first frame 211 and the first cover 212 may provide (or form) a first rear area and a first lateral area of the exterior of the foldable electronic device 2. The first frame 211 may provide (or form) at least a portion of the first lateral area of the foldable electronic device 2. The first cover 212 may provide (or form) at least a portion of the first rear area of the foldable electronic device 2. The first rear area may face in the opposite direction to the first front area of the foldable electronic device 2 provided (or formed) by the first display area 251 of the first display module 25.

According to an embodiment, the first frame 211 may include a first side (also referred to as a first lateral member, a first lateral structure, or a first lateral bezel structure) 2112. The first side 2112 may at least partially surround the space between the first display area 251 and the first cover 212, and may at least partially provide (or form) the first lateral area of the exterior of the foldable electronic device 2.

According to an embodiment, the first frame 211 may include a first support plate (also referred to as a first support portion or a first support member) 2111 extending from or connected to the first side 2112. The first support plate 2111 may be a structural element positioned inside the foldable electronic device 2 so as to correspond to the first housing 21.

According to an embodiment, the first frame 211 may be provided (or formed) as an integrated or single structure (e.g., single continuous structure or complete structure) including the first support plate 2111 and the first side 2112.

According to an embodiment, the first frame 211 may be provided as a combination of a conductive body (or metal body) (not separately illustrated) including one or more conductive portions and a non-conductive body (or non-metal body) (not separately illustrated) including one or more non-conductive portions.

According to an embodiment, the first support plate 1211 may be positioned at least partially between the first display area 251 and the first cover 212. The first display area 251 may be disposed on the first support plate 2111, and the first support plate 2111 may support the first display area 251.

According to an embodiment, various electrical components (not separately illustrated), such as a first printed circuit board or a first battery, may be at least partially disposed on the first support plate 2111 of the first frame 211 between the first frame 211 and the first cover 212.

According to an embodiment, electrical components (or electronic components) or various members related to the electrical components may be disposed on the first frame 211 or the first support plate 2111, or may be supported by the first frame 211 or the first support plate 2111. The first support plate 211 may include, for example, a first support area (also referred to as a first support surface) 2111A and a third support area (also referred to as a third support surface) 2111B. The first support area 2111A may be oriented substantially toward the first display area 251 of the first display module 25. The third support area 2111B may be positioned on the side opposite to the first support area 2111A. The third support area 2111B may be oriented substantially toward the first cover 212. Electrical components (or electronic parts) or various members related to the electrical components may be disposed on the first support area 2111A and/or the third support area 2111B, or may be supported by the first support area 2111A and/or the third support area 2111B.

According to an embodiment, the second housing 22 may include a second frame (also referred to as a second frame structure or second framework) 221 and/or a second cover 222 disposed on the second frame 221. The combination of the second frame 221 and the second cover 222 may provide (or form) a second rear area and a second lateral area of the exterior of the foldable electronic device 2. The second frame 221 may provide (or form) at least a portion of the second lateral area of the foldable electronic device 2. The second cover 222 may provide (or form) at least a portion of the second rear area of the foldable electronic device 2. The second rear area may be oriented toward a direction opposite to that of the second front area of the foldable electronic device 2 provided (or formed) by the second display area 252.

According to an embodiment, the second frame 221 may include a second side (also referred to as a second lateral member, a second lateral structure, or a second lateral bezel structure) 2212. The second side 2212 may at least partially surround the space between the second display area 252 and the second cover 222, and may at least partially provide (or form) the second lateral area of the exterior of the foldable electronic device 2.

According to an embodiment, the second frame 221 may include a second support plate (also referred to as a second support portion or second support member) 2211 extending from or connected to the second side 2212. The second support plate 2211 may be a structural element positioned inside the foldable electronic device 2 so as to correspond to the second housing 22.

According to an embodiment, the second frame 221 may be provided as an integrated or single structure (e.g., single continuous structure or complete structure) including the second support plate 2211 and the second side 2212.

According to an embodiment, the second frame 221 may be provided as a combination of a conductive body (or metal body) (not separately illustrated) including one or more conductive portions and a non-conductive body (or non-metal body) (not separately illustrated) including one or more non-conductive portions.

According to an embodiment, the second support plate 2211 may be positioned at least partially between the second display area 252 and the second cover 222. The second display area 252 may be disposed on the second support plate 2211, and the second support plate 2211 may support the second display area 252.

According to an embodiment, various electrical components (not shown separately), such as a second printed circuit board or a second battery, may be at least partially disposed on the second support plate 2211 of the second frame 221 between the second frame 221 and the second cover 222.

According to an embodiment, electrical components (or electronic components) or various members related to the electrical components may be disposed on the second frame 221 or the second support plate 2211, or may be supported by the second frame 221 or the second support plate 2211. The second support plate 221 may include, for example, a second support area (also referred to as a second support surface) 2211A and a fourth support area (also referred to as a fourth support surface) 2211B. The second support area 2211A may be oriented substantially toward the second display area 252 of the first display module 25. The fourth support area 2211B may be positioned on the side opposite to the second support area 2211A. The fourth support area 2211B may be substantially oriented toward the second cover 222. Electrical components (or electronic components) or various members related to the electrical components may be disposed on the second support area 2211A and/or the fourth support area 2211B, or may be supported by the second support area 2211A and/or the fourth support area 2211B.

According to an embodiment, the first side 2112 of the first frame 211 may include a first lateral portion B1, a second lateral portion B2, a third lateral portion B3, and/or a fourth lateral portion B4. The first lateral portion B1 may extend in a direction perpendicular to the center line A of the foldable electronic device 2. The third lateral portion B3 may be spaced apart from the first lateral portion B1 in the direction of the center line A of the foldable electronic device 2, and may be substantially parallel to the first lateral portion B1. The second lateral portion B2 may extend or connect one end of the first lateral portion B1 and one end of the third lateral portion B3. The fourth lateral portion B4 may extend or connect the other end of the first lateral portion B1 and the other end of the third lateral portion B3. The second lateral portion B2 and the fourth lateral portion B4 may be substantially parallel to each other. The fourth lateral portion B4 may be positioned closer to the center line A of the foldable electronic device 2 than the second lateral portion B2.

According to an embodiment, a first corner C1 from or to which the first lateral portion B1 and the second lateral portion B2 extend or connect, and/or a second corner C2 from or to which the second lateral portion B2 and the third lateral portion B3 extend or connect may be provided (or formed) in a smooth curved shape.

According to an embodiment, when viewed from above the first cover 212, the first lateral portion B1, the second lateral portion B2, the third lateral portion B3, and the fourth lateral portion B4 may surround the first cover 212.

According to an embodiment, the second side 2212 of the second frame 221 may include a fifth lateral portion B5, a sixth lateral portion B6, a seventh lateral portion B7, and/or an eighth lateral portion B8. The fifth lateral portion B5 may extend in a direction perpendicular to the center line A of the foldable electronic device 2. The seventh lateral portion B7 may be spaced apart from the fifth lateral portion B5 in the direction of the center line A of the foldable electronic device 2, and may be substantially parallel to the fifth lateral portion B5. The sixth lateral portion B6 may extend or connect one end of the fifth lateral portion B5 and one end of the seventh lateral portion B7. The eighth lateral portion B8 may extend or connect the other end of the fifth lateral portion B5 and the other end of the seventh lateral portion B7. The sixth lateral portion B6 and the eighth lateral portion B8 may be substantially parallel to each other. The eighth lateral portion B8 may be positioned closer to the center line A of the foldable electronic device 2 than the sixth lateral portion B6.

According to an embodiment, a third corner C3 from or to which the fifth lateral portion B5 and the sixth lateral portion B6 extend or connect, and/or a fourth corner C4 from or to which the sixth lateral portion B6 and the seventh lateral portion B7 extend or connect may be provided (or formed) in a smooth curved shape.

According to an embodiment, when viewed from above the second cover 222, the fifth lateral portion B5, the sixth lateral portion B6, the seventh lateral portion B7, and the eighth lateral portion B8 may surround the second cover 222.

According to an embodiment, in the folded state of the foldable electronic device 2, the first side 2112 of the first frame 211 and the second side 2212 of the second frame 221 may be aligned to overlap each other. In the folded state of the foldable electronic device 2, the first lateral portion B1 and the fifth lateral portion B5 may be aligned to overlap each other. In the folded state of the foldable electronic device 2, the second lateral portion B2 and the sixth lateral portion B6 may be aligned to overlap each other. In the folded state of the foldable electronic device 2, the third lateral portion B3 and the seventh lateral portion B7 may be aligned to overlap each other.

According to an embodiment, the first lateral portion B1, the second lateral portion B2, and the third lateral portion B3 may form a bezel (e.g., a first screen bezel) on one side to surround one side area of the first display module 25 based on the center line A of the foldable electronic device 2. The fifth lateral portion B5, the sixth lateral portion B6, and the seventh lateral portion B7 may form a bezel (e.g., a second screen bezel) on the other side to surround the other side area of the first display module 25 based on the center line A of the foldable electronic device 2.

According to an embodiment, the fourth lateral portion B4 and the eighth lateral portion B8 may be positioned on the side opposite to the third display area 253. When viewed from above the front face of the foldable electronic device 2 in the unfolded state, the fourth lateral portion B4 and the eighth lateral portion B8 may not be visible.

According to an embodiment, the hinge housing (also referred to as a hinge cover) 23 may be connected to one or more hinge modules (e.g., a first hinge module 241, a second hinge module 242, and a third hinge module 243) included in the hinge portion 24.

According to an embodiment, when the foldable electronic device 2 transitions from the unfolded state to the folded state, a gap between the first frame 211 and the second frame 221, which are connected via the hinge portion 24, may open on the opposite side of the third display area 253 due to a change in the relative position between the first frame 211 and the second frame 221 and a change in the state of the hinge portion 24 coupled with the hinge housing 23. The hinge housing 23 may be exposed to the outside through the open gap. For example, in the folded state of the foldable electronic device 2, the hinge housing 23 may be exposed to the outside through an open gap between the fourth lateral portion B4 of the first frame 211 and the eighth lateral portion B8 of the second frame 221. The width of the gap between the fourth lateral portion B4 of the first frame 211 and the eighth lateral portion B8 of the second frame 221 may vary depending on the angle between the first frame 211 and the second frame 221. The hinge housing 23 may be more exposed to the outside in the folded state of the foldable electronic device 2 than in the intermediate state of the foldable electronic device 2. In the folded state of the foldable electronic device 2, the hinge housing 23 may constitute a portion of the exterior of the foldable electronic device 2, which covers its interior. In the folded state of the foldable electronic device 2, the side of the foldable electronic device 2 may include a first lateral area provided by the first side 2112 of the first frame 211, a second lateral area provided by the second side 2212 of the second frame 221, and a third lateral area provided by the hinge housing 23.

According to an embodiment, when the foldable electronic device 2 transitions from the folded state to the unfolded state, the gap between the first frame 211 and the second frame 221, which are connected via the hinge portion 24, on the opposite side of the third display area 253 may be closed due to a change in the relative position between the first frame 211 and the second frame 221 and a change in the state of the hinge portion 24 coupled with the hinge housing 23. For example, in the unfolded state of the foldable electronic device 2, the gap between the fourth lateral portion B4 of the first frame 211 and the eighth lateral portion B8 of the second frame 221 may be closed, so that the hinge housing 23 may not be exposed to the outside.

According to an embodiment, the second display module 26 (also referred to as a second display) may be positioned between the second cover 222 and the second support plate 2211 of the second frame 221. The second display module 26 may be disposed on or coupled to the second cover 222 and/or the second support plate 2211. The display area of the second display module 26 may be visually visible through the second cover 222.

According to an embodiment, the second display module 26 may be provided in a form including the second cover 222. The second cover 222 may be excluded from the foldable housing 20.

According to an embodiment, the foldable electronic device 2 may be configured to display an image through the second display module 26, instead of the first display module 25, in the folded state.

According to an embodiment, the first display module 25 and/or the second display module 26 may include a touch detection circuit (e.g., a touch sensor) (not illustrated separately). The touch detection circuit may include, for example, a transparent conductive layer (or film) based on various conductive materials such as indium tin oxide (ITO).

According to an embodiment, the first display module 25 and/or the second display module 26 may further include a pressure detection circuit (also referred to as a pressure sensor) (not illustrated separately) capable of measuring the intensity (pressure) of a touch.

According to an embodiment, the first display module 25 and/or the second display module 26 may include an electromagnetic induction panel (e.g., a digitizer)

(not illustrated separately) that detects a magnetic field-type pen input device (e.g., an electronic pen or a stylus pen).

According to an embodiment, the first camera module 301, the second camera module 302, the third camera module 303, the fourth camera module 304, and/or the fifth camera module 305 may include one or more lenses, image sensor(s), and/or an image signal processor (ISP).

According to an embodiment, the first camera module (also referred to as a first camera, a first rear camera module, or a first rear camera) 301, a second camera module (also referred to as a second camera, a second rear camera module, or a second rear camera) 302, and a third camera module (also referred to as a third camera, a third rear camera module, or a third rear camera) 303 may be accommodated in the first housing 21 so as to correspond to the first cover 212 (or the first rear area of the foldable electronic device 2). For example, the first cover 212 may include a first camera hole (or a first light-transmitting area) corresponding to the first camera module 301, a second camera hole (or a second light-transmitting area) corresponding to the second camera module 302, and/or a third camera hole (or a third light-transmitting area) corresponding to the third camera module 303. The positions or numbers of camera modules accommodated in the first housing 21 to correspond to the first cover 212 are not limited to the illustrated examples and may vary.

According to an embodiment, the first camera module 301, the second camera module 302, or the third camera module 303 may include a wide-angle camera module, a telephoto camera module, a color camera module, a monochrome camera module, or an IR camera (e.g., a time-of-flight (TOF) camera or a structured light camera) module.

According to an embodiment, the first camera module 301, the second camera module 302, and the third camera module 303 may have different properties (e.g., angles of view) or functions.

According to various embodiments, the first camera module 301, the second camera module 302, or the third camera module 303 may provide different angles of view (or lenses with different angles of view). The foldable electronic device 2 may selectively use the angles of view of the first camera module 301, the second camera module 302, or the third camera module 303, based on a user's selection of the angle of view.

According to an embodiment, a fourth camera module (also referred to as a fourth camera, a first front camera module, or a first front camera) 304 may be accommodated in the first housing 21 so as to correspond to the first front area of the foldable electronic device 2.

According to an embodiment, the fourth camera module 304 may overlap the first display area 251 of the first display module 25 when viewed from above the first front area of the foldable electronic device 2. The fourth camera module 304 may be positioned on the back side of the first display area 251 or under the first display area 251. When viewed from the outside of the foldable electronic device 2, the fourth camera module 304 or the location of the fourth camera module 304 may not be substantially visually distinguishable (or exposed). The fourth camera module 304 may include, for example, a hidden display camera on the back side (e.g., an under-display camera (UDC)). External light may pass through the first display module 25 to reach the fourth camera module 304.

According to various embodiments, although not separately illustrated, the fourth camera module 304 may be accommodated in the second housing 22 so as to correspond to the second front area of the foldable electronic device 2.

According to various embodiments, although not separately illustrated, an additional camera module (not separately illustrated) may be accommodated in the second housing 22 so as to correspond to the second front area of the foldable electronic device 2.

According to an embodiment, a fifth camera module (also referred to as a fifth camera, a fourth rear camera module, or a fourth rear camera) 305 may be accommodated in the second housing 22 so as to correspond to the second cover 222 (or the second rear area of the foldable electronic device 2).

According to an embodiment, the fifth camera module 305 may be positioned in alignment with an opening provided in the second display module 26, or at least partially inserted into the opening. External light may pass through the opening provided in the second cover 222 and the second display module 26, and reach the fifth camera module 305. The opening of the second display module 26 aligned with or overlapping the fifth camera module 305 may be a through-hole. In various embodiments, the opening of the second display module 26 aligned with or overlapping the fifth camera module 305 may be provided as a notch (not separately illustrated).

According to various embodiments, the fifth camera module 305 may overlap the second display module 26 when viewed from above the second rear area of the foldable electronic device 2. The fifth camera module 305 may be positioned on the back side of the second display module 26 or under the second display module 26. When viewed from the outside of the foldable electronic device 2, the fifth camera module 305 or the location of the fifth camera module 305 may not be substantially visually distinguishable (or exposed). The fifth camera module 305 may include, for example, a hidden display camera on the back side (e.g., UDC). External light may pass through the second cover 222 and the second display module 26 to reach the fifth camera module 305.

According to various embodiments, the first camera module 301, the second camera module 302, the third camera module 303, the fourth camera module 304, or the fifth camera module 305 may operate as at least a part of a sensor module. For example, the IR camera module may operate as at least a part of the sensor module.

According to an embodiment, the light-emitting module 306 may be accommodated in the first housing 21 so as to correspond to the first cover 212 (or the first rear area of the foldable electronic device 2). The first cover 212 may include a flash hole (or a fourth light-transmitting area) corresponding to the light-emitting module 306. The light-emitting module 306 may include, for example, an LED or a xenon lamp. The light-emitting module 306 may include a light source for the first camera module 301, the second camera module 302, and/or the third camera module 303.

According to various embodiments, the foldable electronic device 2 may further include another light-emitting module (not separately illustrated) accommodated in the foldable housing 20 so as to correspond to the front face of the foldable electronic device 2. The light-emitting module may provide state information of the foldable electronic device 2 in the form of light. In various embodiments, the light-emitting module may provide a light source that interworks with the operation of the fourth camera module 304.

According to an embodiment, the sensor module 307 may be accommodated in the foldable housing 20 so as to correspond to the front face of the foldable electronic device 2.

According to an embodiment, the sensor module 307 may include an optical sensor module. The optical sensor module may include, for example, a proximity sensor module or an illuminance sensor module.

According to an embodiment, the sensor module 307 may overlap the first display area 251 of the first display module 25 when viewed from above the first front area of the foldable electronic device 2. The sensor module 307 may be positioned on the back side of the first display area 251 or under the first display area 251. When viewed from the outside of the foldable electronic device 2, the sensor module 307 or the location of the sensor module 307 may not be substantially visually distinguishable (or exposed). External light may pass through the first display module 25 to reach the sensor module 307.

According to various embodiments, the foldable electronic device 2 may further include various other sensor modules (e.g., a biometric sensor module) (not separately illustrated).

According to an embodiment, the first audio input module may include a first microphone (also referred to as a first mike) (not illustrated separately). The second audio input module may include a second microphone (also referred to as a second mike) (not illustrated separately). The third audio input module may include a third microphone (also referred to as a third mike) (not illustrated separately). The fourth audio input module may include a fourth microphone (also referred to as a fourth mike) (not illustrated separately). The first microphone may be accommodated in the first housing 21 so as to correspond to, for example, a first microphone hole H11 included in the first lateral portion B1 of the first side 2112. The second microphone may be accommodated in the first housing 21 so as to correspond to, for example, a second microphone hole H12 included in the third lateral portion B3 of the first side 2112. The third microphone may be accommodated in the first housing 21 so as to correspond to, for example, a third microphone hole H13 included in the third lateral portion B3 of the first side 2112. The fourth microphone may be accommodated in the second housing 22 so as to correspond to, for example, a fourth microphone hole H14 included in the seventh lateral portion B7 of the second side 2212. The positions or numbers of microphones and microphone holes corresponding to the microphones are not limited to the illustrated examples, and may vary.

According to an embodiment, the first audio output module may include a first speaker (not separately illustrated). The second audio output module may include a second speaker (not illustrated separately). The first speaker or the second speaker may be a speaker for multimedia playback or recording playback. The first speaker may be accommodated in the second housing 22 so as to correspond to, for example, a first speaker hole H21 included in the second side 2212. The second speaker may be accommodated in the second housing 22 so as to correspond to, for example, a second speaker hole H22 provided in the second side 2212. The positions and numbers of speakers for multimedia playback or recording playback and speaker holes corresponding to the speakers are not limited to the illustrated examples, and may vary.

According to an embodiment, the third audio output module may include a third speaker (not illustrated separately). The third speaker may include a call receiver. The third speaker may be accommodated in the first housing 21 so as to correspond to, for example, a third speaker hole H23 provided between the second cover 222 and the seventh lateral portion B7 of the second side 2212. The positions or numbers of the call speakers and speaker holes corresponding to the speakers are not limited to the illustrated example, and may vary.

According to an embodiment, the key input module may include a first key (also referred to as a first side key) 309, a second key (also referred to as a second side key) 310, and/or a key signal generation unit (not separately illustrated). For example, the first key 309 may be positioned in a first key hole included in the second lateral portion B2 of the first side 2112, and the second key 310 may be positioned in a second key hole included in the second lateral portion B2 of the first side 2112. The key signal generation unit may be configured to generate a first key signal in response to a press or touch on the first key 309, and a second key signal in response to a press or touch on the second key 310. The locations or number of key input modules is not limited to the illustrated example, and may vary.

According to an embodiment, a first connection terminal 311 (also referred to as a first connector or a first interface terminal) may be accommodated in the first housing 21 so as to correspond to a first connection terminal hole (e.g., a first connector hole) included in the first lateral portion B1 of the first side 2112. The foldable electronic device 2 may transmit and/or receive power and/or data to and from an external electronic device electrically connected to the first connection terminal 311. The first connection terminal 311 may include, for example, a USB connector or an HDMI connector. The positions of the first connection terminal 311 and the first connection terminal hole corresponding to the first connection terminal 311 are not limited to the illustrated examples, and may vary.

According to an embodiment, a second connection terminal (also referred to as a second connector or a second interface terminal) 312 may be accommodated in the second housing 22 so as to correspond to a second connection terminal hole (e.g., a second connector hole) included in the sixth lateral portion B6 of the second side 2112. An external storage medium, such as a secure digital (SD) memory card, a SIM card, or a universal SIM (USIM), may be connected to the second connection terminal 312. The positions of the second connection terminal 312 and the second connection terminal hole corresponding to the second connection terminal 312 are not limited to the illustrated example, and may vary.

The foldable electronic device 2 may further include various components depending on their provision form. These components vary in accordance with the convergence trend of foldable electronic device 2, making it impossible to list them all, but additional components equivalent to the aforementioned components may be further included in the foldable electronic device 2. In various embodiments, specific components may be excluded from the aforementioned components or replaced with other components depending on the provision form.

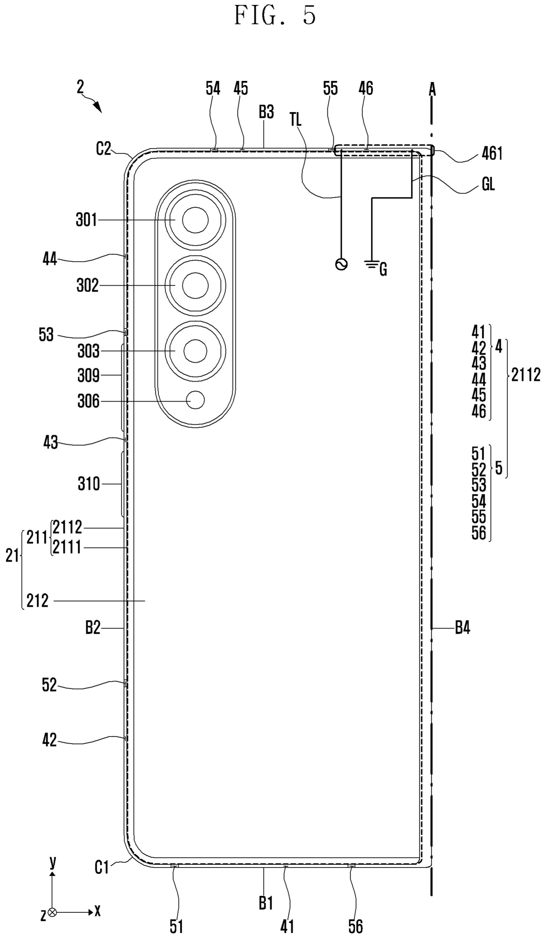

FIG. 5 is a diagram illustrating a portion of a foldable electronic device 2 according to an embodiment of the disclosure. It should be understood that the disclosure implements and encompasses all combinations of the features and/or embodiments disclosed in relation to FIG. 5. That is, all combinations of the features described below in relation to FIG. 5 should be considered to be included in the disclosure as specific examples.

According to an embodiment, the first side 2112 of the first frame 211 may include a first side metal (also referred to as a first side metal structure, a first side conductor, a first side conductive structure, a first outer metal structure, a first outer conductor, a first outer conductive structure, a first lateral metal, a first lateral metal structure, a first lateral conductor, or a first lateral conductive structure) 4 and a first side non-metal (also referred to as a first side non-metal structure, a first side non-conductor, a first side non-conductive structure, a first outer non-metal structure, a first outer non-conductor, a first outer non-conductive structure, a first lateral non-metal, a first lateral non-metal structure, a first lateral non-conductor, or a first lateral non-conductive structure) 5.

According to an embodiment, the first side metal 4 of the first side 2112 may include a plurality of metals (also referred to as outer metals, outer conductive portions, or side conductive portions) 41, 42, 43, 44, 45, and 46. The plurality of metals 41, 42, 43, 44, 45, and 46 may include, for example, a first metal 41, a second metal 42, a third metal 43, a fourth metal 44, a fifth metal 45, and a sixth metal 46.

According to an embodiment, the first metal 41 may be positioned between the second metal 42 and the sixth metal 46. The first metal 41 may extend from one end adjacent to the second metal 42 to the other end adjacent to the sixth metal 46. The first metal 41 may provide (or form) a portion of the first lateral portion B1.

According to an embodiment, the second metal 42 may be positioned between the first metal 41 and the third metal 43. The second metal 42 may extend from one end adjacent to the first metal 41 to the other end adjacent to the third metal 43. The second metal 42 may provide (or form) the first corner C1, a portion of the first lateral portion B1 extending from the first corner C1, and a portion of the second lateral portion B2 extending from the first corner C1.

According to an embodiment, the third metal 43 may be positioned between the second metal 42 and the fourth metal 44. The third metal 43 may extend from one end adjacent to the second metal 42 to the other end adjacent to the fourth metal 44. The third metal 43 may provide (or form) a portion of the second lateral portion B2.

According to an embodiment, the fourth metal 44 may be positioned between the third metal 43 and the fifth metal 45. The fourth metal 44 may extend from one end adjacent to the third metal 43 to the other end adjacent to the fifth metal 45. The fourth metal 44 may provide (or form) the second corner C2, a portion of the second lateral portion B2 extending from the second corner C2, and a portion of the third lateral portion B3 extending from the second corner C2.

According to an embodiment, the fifth metal 45 may be positioned between the fourth metal 44 and the sixth metal 46. The fifth metal 45 may extend from one end adjacent to the fourth metal 44 to the other end adjacent to the sixth metal 46. The fifth metal 45 may provide (or form) a portion of the third lateral portion B3.

According to an embodiment, the sixth metal 46 may be positioned between the first metal 41 and the fifth metal 45. The sixth metal 46 may extend from one end adjacent to the first metal 41 to the other end adjacent to the fifth metal 45. The sixth metal 46 may provide (or form) the fourth lateral portion B4, a portion of the first lateral portion B1 extending from one end of the fourth lateral portion B4, and a portion of the third lateral portion B3 extending from the other end of the fourth lateral portion B4.

According to an embodiment, the first side non-metal 5 of the first side 2112 may include a plurality of non-metals (also referred to as outer non-metals, outer non-conductive portions, or side non-conductive portions) 51, 52, 53, 54, 55, and 56. The plurality of non-metals 51, 52, 53, 54, 55, and 56 may include, for example, a first non-metal 51, a second non-metal 52, a third non-metal 53, a fourth non-metal 54, a fifth non-metal 55, and a sixth non-metal 56.

According to an embodiment, the first non-metal 51 (e.g., a first insulating portion) may be disposed in a first segment portion (e.g., a first gap) between the first metal 41 and the second metal 42. The first metal 41 and the second metal 42 may be physically separated from each other with the first non-metal 51 interposed therebetween. The first non-metal 51 may provide (or form) a portion of the first lateral portion B1.

According to an embodiment, the second non-metal 52 (e.g., a second insulating portion) may be disposed in a second segment portion (e.g., a second gap) between the second metal 42 and the third metal 43. The second metal 42 and the third metal 43 may be physically separated from each other with the second non-metal 52 interposed therebetween. The second non-metal 52 may provide (or form) a portion of the second lateral portion B2.

According to an embodiment, the third non-metal 53 (e.g., a third insulating portion) may be disposed in a third segment portion (e.g., a third gap) between the third metal 43 and the fourth metal 44. The third metal 43 and the fourth metal 44 may be physically separated from each other with the third non-metal 51 interposed therebetween. The third non-metal 53 may provide (or form) a portion of the second lateral portion B2.

According to an embodiment, the fourth non-metal 54 (e.g., a fourth insulating portion) may be disposed in a fourth segment portion (e.g., a fourth gap) between the fourth metal 44 and the fifth metal 45. The fourth metal 44 and the fifth metal 45 may be physically separated from each other with the fourth non-metal 54 interposed therebetween. The fourth non-metal 54 may provide (or form) a portion of the third lateral portion B3.

According to an embodiment, the fifth non-metal 55 (e.g., a fifth insulating portion) may be disposed in a fifth segment portion (e.g., a fifth gap) between the fifth metal 45 and the sixth metal 46. The fifth metal 45 and the sixth metal 46 may be physically separated from each other with the fifth non-metal 55 interposed therebetween. The fifth non-metal 55 may provide (or form) a portion of the third lateral portion B3.

According to an embodiment, the sixth non-metal 56 (e.g., a sixth insulating portion) may be positioned in a sixth segment portion (e.g., a sixth gap) between the first metal 41 and the sixth metal 46. The first metal 41 and the sixth metal 46 may be physically separated from each other with the sixth non-metal 56 interposed therebetween. The sixth non-metal 56 may provide (or form) a portion of the first lateral portion B1.

According to various embodiments, although not illustrated, the number, positions, and/or shapes of the plurality of metals and/or the plurality of non-metals included in the first side 2112 are not limited to the illustrated examples, and may vary.

According to an embodiment, the first support plate 2111 of the first frame 211 may be provided (or formed) as a combination of a first inner metal (not illustrated separately) and a first inner non-metal (not illustrated separately). The first inner metal may include a combination of one or more conductive portions. The first inner non-metal may include a combination of one or more non-conductive portions. Some surface areas of the first support plate 2111 may include conductive surface areas provided by the first inner metal, and others of the first support plate 2111 may include non-conductive surface areas provided by the first inner non-metal.

According to an embodiment, the first inner metal (not illustrated separately) of the first support plate 2111 may be connected to the first side metal 4 of the first side 2112. For example, a first metal material included in the first inner metal of the first support plate 2111 may be different from a second metal material included in the first side metal 4. For example, the first metal material included in the first inner metal may be the same as or different from the second metal material included in the first side metal 4.

According to an embodiment, an integrated or single metal (or metal structure) (e.g., a single continuous structure or complete structure), including the first inner metal (not illustrated separately) of the first support plate 2111 and the first side metal 4 of the first side 2112, may be provided (or formed).

According to an embodiment, the first inner non-metal (not illustrated separately) of the first support plate 2111 may be connected to the first side non-metal 5 of the first side 2112. For example, a first non-metal material included in the first inner non-metal may be the same as or different from a second non-metal material included in the first side non-metal 5.

According to an embodiment, an integrated or single non-metal (or non-metal structure) (e.g., a single continuous structure or complete structure), including the first inner non-metal (not illustrated separately) of the first support plate 2111 and the first side non-metal 5 of the first side 2112, may be provided (or formed).

According to an embodiment, the second side 2212 of the second frame 221 may include a second side metal (also referred to as a second side metal structure, a second side conductor, a second side conductive structure, a second outer metal structure, a second outer conductor, a second outer conductive structure, a second lateral metal, a second lateral metal structure, a second lateral conductor, or a second lateral conductive structure) including a plurality of metals, and a second side non-metal (also referred to as a first side non-metal structure, a first side non-conductor, a first side non-conductive structure, a first outer non-metal structure, a first outer non-conductor, a first outer non-conductive structure, a first lateral non-metal, a first lateral non-metal structure, a first lateral non-conductor, or a first lateral non-conductive structure) including a plurality of non-metals.

According to an embodiment, in the folded state of the foldable electronic device 2, the first side metal 4 included in the first side 2112 of the first frame 211 and the second side metal included in the second side 2212 of the second frame 221 may be aligned to overlap each other. For example, in the folded state of the foldable electronic device 2, the plurality of metals 41, 42, 43, 44, 45, and 46 included in the first side 2112 and the plurality of metals included in the second side 2212 may be aligned and overlapped to correspond to each other.

According to an embodiment, in the folded state of the foldable electronic device 2, the first side non-metal 5 included in the first side 2112 of the first frame 211 and the second side non-metal included in the second side 2212 of the second frame 221 may be aligned to overlap each other. For example, in the folded state of the foldable electronic device 2, the plurality of non-metals 51, 52, 53, 54, 55, and 56 included in the first side 2112 and the plurality of non-metals included in the second side 2212 may be aligned and overlapped to correspond to each other.

According to an embodiment, the second support plate 2211 (see FIG. 4) of the second frame 221 may be implemented in a manner at least partially identical or similar to the first support plate 2111 of the first frame 211. The second support plate 2211 (see FIG. 4) may be provided (or formed) as a combination of the second inner metal (not illustrated separately) and the second inner non-metal (not illustrated separately).

According to an embodiment, the foldable electronic device 2 may include a ground structure (not illustrated separately). The ground structure may reduce or prevent electromagnetic interference (EMI) to a plurality of electrical elements included in the foldable electronic device 2. The ground structure of the foldable electronic device 2 may reduce or prevent the electromagnetic influence of noise from outside of the foldable electronic device 2 on a plurality of electrical elements included in the foldable electronic device 2. The ground structure of the foldable electronic device 2 may reduce or prevent electromagnetic interference between the electrical elements included in the foldable electronic device 2. The ground structure of the foldable electronic device 2 may include, for example, a combination of a plurality of conductors electrically and/or physically connected to each other.

According to an embodiment, the ground structure of the foldable electronic device 2 may include a first ground area (not illustrated separately) included in a first printed circuit board accommodated in the first housing 21.

According to an embodiment, the ground structure of the foldable electronic device 2 may include a second ground area (not illustrated separately) included in a second printed circuit board accommodated in the second housing 22.

According to an embodiment, the ground structure of the foldable electronic device 2 may include a third ground area (not illustrated separately) included in the first display module 25.

According to an embodiment, the ground structure of the foldable electronic device 2 may include a fourth ground area (not illustrated separately) included in the second display module 26.

According to an embodiment, the ground structure of the foldable electronic device 2 may include the first side metal 4 included in the first side 2112 of the first frame 211. The ground structure of the foldable electronic device 2 may include the first inner metal (not illustrated separately) included in the first support plate 2111 of the first frame 211.

According to an embodiment, the ground structure of the foldable electronic device 2 may include the second side metal included in the second side 2212 of the second frame 221. The ground structure of the foldable electronic device 2 may include the second inner metal (not illustrated separately) included in the second support plate 2211 of the second frame 221.

According to various embodiments, the ground structure of the foldable electronic device 2 may further include various other conductive materials or metals (not illustrated separately).

According to an embodiment, the foldable electronic device 2 may include a first conductive area (not illustrated separately) and a second conductive area (not illustrated separately). The first conductive area and the second conductive area may be electrically connected, or may be electrically and physically connected. In an embodiment, in a case where the first conductive area is configured to substantially radiate electromagnetic waves, the first conductive area among a combination of the first conductive area and the second conductive area may be defined or interpreted as an antenna (also referred to as a radiator or antenna radiator), and the second conductive area among the combination of the first conductive area and the second conductive area may be defined or interpreted as a ground structure of the foldable electronic device 2 that is distinct from the antenna. In an embodiment, in a case where the first conductive area is configured to substantially radiate electromagnetic waves, a combination of the first conductive area and the second conductive area may be defined or interpreted as a ground structure of the foldable electronic device 2, and the first conductive area may be defined or interpreted as an antenna implemented through a part of the ground structure of the foldable electronic device 2. In an embodiment, in a case where the first conductive area is configured to substantially radiate electromagnetic waves, the second conductive area may operate as antenna ground that electromagnetically influences the first conductive area (e.g., the antenna). The antenna ground may contribute to securing antenna radiation performance (or radio transmission/reception performance or communication performance) and/or coverage with respect to the antenna. The antenna ground may reduce electromagnetic interference (EMI) or signal loss of the antenna.

According to an embodiment, a part of the ground structure of the foldable electronic device 2 may operate as an antenna (also referred to as a radiator or the antenna radiator). A part of the ground structure of the foldable electronic device 2 may be electrically connected to a wireless communication circuit (e.g., the wireless communication module 192 in FIG. 1) disposed on the first printed circuit board accommodated in the first housing 21 or the second printed circuit board accommodated in the second housing 22. A part of the ground structure of the foldable electronic device 2 may receive (or be fed with) electromagnetic signals (or wireless signals, RF signals, or radiation current) from the wireless communication circuit and operate as an antenna (e.g., a resonator). Another part of the ground structure of the foldable electronic device 2 may be formed as antenna ground that exert electromagnetic influence on at least one antenna.

According to an embodiment, at least one metal included in the first side 2112 of the first frame 211 and/or at least one metal included in the second side 2212 of the second frame 221 may be electrically connected to the wireless communication circuit (e.g., the wireless communication module 192 in FIG. 1) included in the foldable electronic device 2, thereby operating as an antenna. At least one metal included in the first side 2112 and/or at least one metal included in the second side 2212 may receive (or be fed with) signals (e.g., electromagnetic signals, wireless signals, RF signals, or radiation current) from the wireless communication circuit and radiate electromagnetic waves.

According to an embodiment, the wireless communication circuit (e.g., the wireless communication module 192 in FIG. 1) of the foldable electronic device 2 may be configured to transmit a signal in at least one selected or designated frequency band to the outside of the foldable electronic device 2 through at least one metal included in the first side 2112 of the first frame 211 and/or at least one metal included in the second side 2212 of the second frame 221. The wireless communication circuit of the foldable electronic device 2 may be configured to receive a signal in at least one selected or designated frequency band from the outside of the foldable electronic device 2 through at least one metal included in the first side 2112 of the first frame 211 and/or at least one metal included in the second side 2212 of the second frame 221.

According to an embodiment, in the folded state of the foldable electronic device 2, aligning the plurality of non-metals 51, 52, 53, 54, 55, and 56 included in the first side 2112 of the first frame 211 and the plurality of non-metals included in the second side 2212 of the second frame 221 so that they correspond to each other may reduce the degradation of antenna radiation performance when at least one metal included in the first side 2112 and/or at least one metal included in the second side 2212 is utilized as an antenna.

According to an embodiment, the wireless communication circuit (e.g., the wireless communication module 192 in FIG. 1) of the foldable electronic device 2 may process a transmission signal or reception signal in at least one selected or designated frequency band through at least one antenna (also referred to as a radiator or antenna radiator). The selected or designated frequency band may include, for example, a low band (LB) (approximately 600MHz to approximately 1GHz), a middle band (MB) (approximately 1GHz to approximately 2.3GHz), a high band (HB) (approximately 2.3GHz to approximately 2.7GHz), or an ultra-high band (UHB) (approximately 2.7GHz to approximately 6GHz). The selected or designated frequency band may also include various other frequency bands.

According to an embodiment, the wireless communication circuit (e.g., the wireless communication module 192 in FIG. 1) of the foldable electronic device 2 may be configured to perform satellite communication through at least one metal included in the first side 2112 of the first frame 211 and/or at least one metal included in the second side 2212 of the second frame 221.

According to an embodiment, a portion, which is substantially included in the third lateral portion B3, of the sixth metal 46 included in the first side 2112 of the first frame 211 may be configured to operate as a satellite communication antenna 461.

According to an embodiment, the wireless communication circuit (e.g., the wireless communication module 192 in FIG. 1) of the foldable electronic device 2 may be electrically connected to a first point of the sixth metal 46 through a first electrical path TL. The ground area G of the foldable electronic device 2 may be electrically connected to a second point of the sixth metal 46 through a second electrical path GL. The wireless communication circuit may provide (or feed) signals (e.g., electromagnetic signals, wireless signals, RF signals, or radiation current) to the sixth metal 46 through the first electrical path TL. The first electrical path TL may be defined or interpreted as a transmission line or feeding line, and the first point may be defined or interpreted as a feeding point. The ground area G may include a portion of the ground structure (not illustrated separately) of the foldable electronic device 2 positioned corresponding to the first housing 21. The second electrical path GL may be defined or interpreted as a grounding line, and the second point may be defined or interpreted as a grounding point. When a signal in the satellite communication band is provided to the sixth metal 46 through the first electrical path TL, a signal path may be formed between the first point (e.g., the feeding point) and the second point (e.g., the grounding point). A portion of the sixth metal 46 corresponding to the signal path may operate as a satellite communication antenna 461 with an electrical length (e.g., a length expressed as the ratio of wavelengths) that forms a resonant frequency within the satellite communication band. The locations and/or the numbers of the feeding points and/or grounding points are not limited to the illustrated example. The ground area G may operate as antenna ground. The antenna ground G may contribute to securing antenna radiation performance (or radio transmission/reception performance or communication performance) and/or coverage for the satellite communication antenna 461. The antenna ground G may reduce electromagnetic interference (EMI) or signal loss for the satellite communication antenna 461, the first electrical path TL, and/or the second electrical path GL.

According to various embodiments, although not separately illustrated, the locations, shapes, and/or numbers of satellite communication antennas are not limited to the illustrated example, and may vary. For example, at least a portion of the first metal 41, the second metal 42, the third metal 43, the fourth metal 44, or the fifth metal 45 included in the first side 2112 of the first frame 211 may be configured to operate as a satellite communication antenna. For example, at least one metal included in the second side 2212 of the second frame 221 may be configured to operate as a satellite communication antenna. For example, the foldable electronic device 2 may include at least one satellite communication antenna accommodated in the first housing 21 (see FIG. 2) or the second housing 22 (see FIG. 2).

According to an embodiment, when the foldable electronic device 2 transitions among the unfolded state, intermediate state, and folded state, the electromagnetic influence of other components of the foldable electronic device 2 on the satellite communication antenna 461 may vary, which may change the radiation pattern of the satellite communication antenna 461.

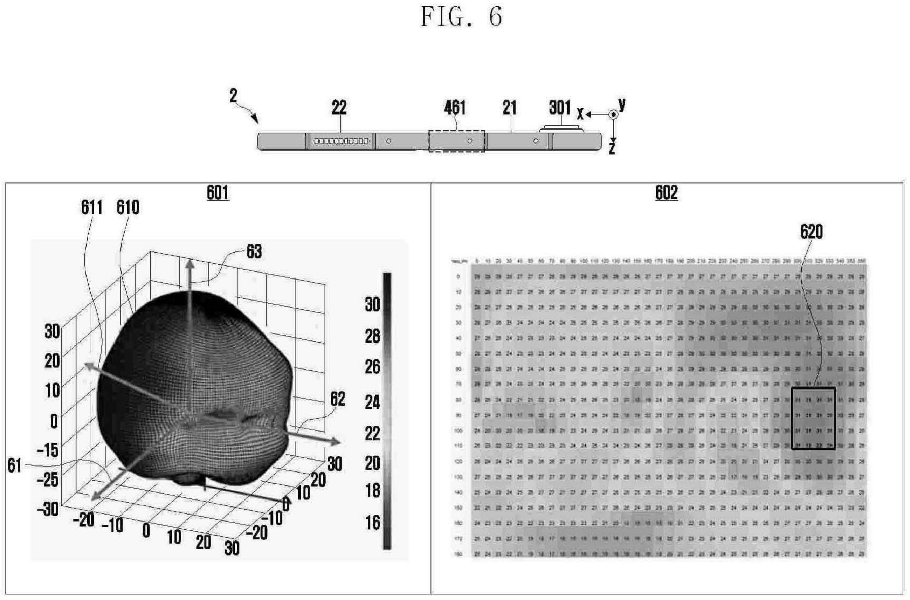

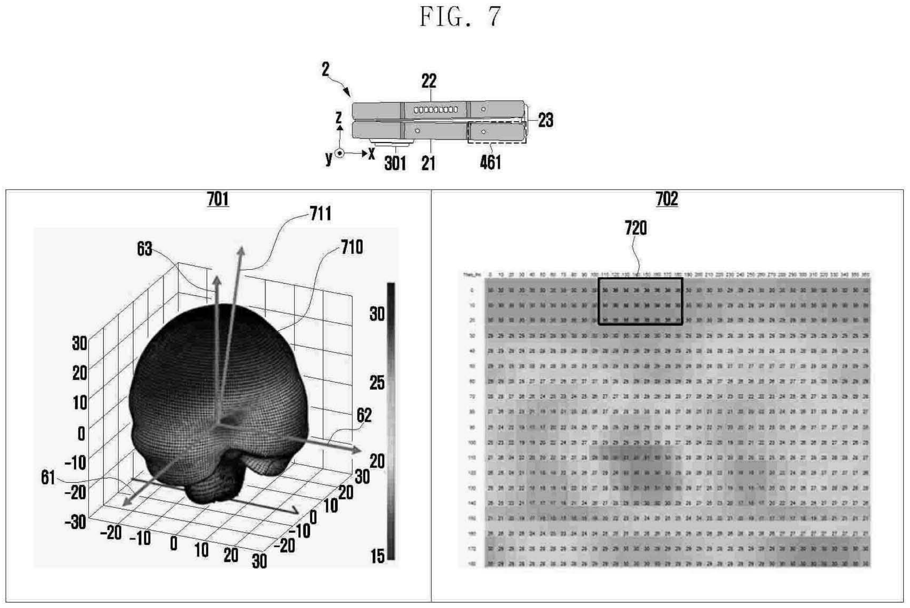

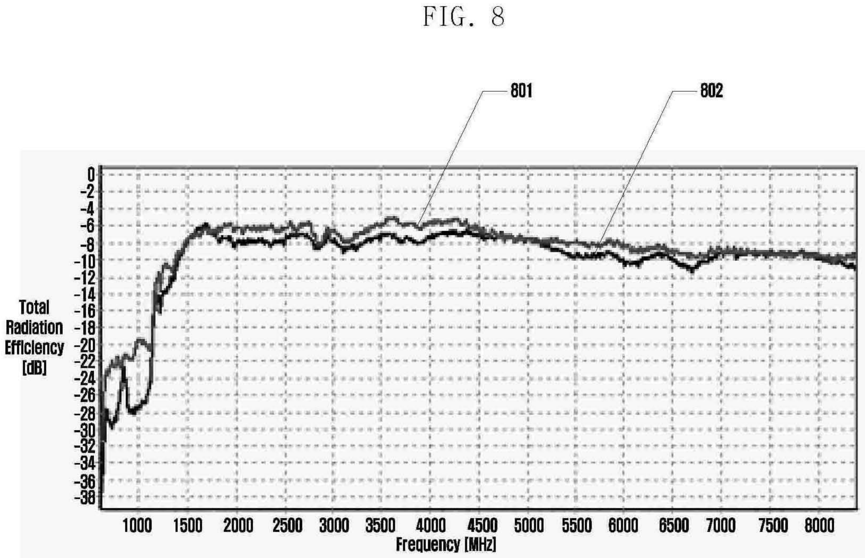

FIG. 6 is a diagram illustrating a foldable electronic device 2 in an unfolded state, a three-dimensional diagram 601 illustrating a radiation pattern of a satellite communication antenna 461 in the unfolded state of the foldable electronic device 2, and a two-dimensional diagram 602 illustrating a radiation pattern of the satellite communication antenna 461 in the unfolded state of the foldable electronic device 2 according to an embodiment of the disclosure. FIG. 7 is a diagram illustrating a foldable electronic device 2 in a folded state, a three-dimensional diagram 701 illustrating a radiation pattern of a satellite communication antenna 461 in the folded state of the foldable electronic device 2, and a two-dimensional diagram 702 illustrating a radiation pattern of the satellite communication antenna 461 in the folded state of the foldable electronic device 2 according to an embodiment of the disclosure. FIG. 8 shows graphs illustrating antenna radiation performance of a foldable electronic device 2 in unfolded and folded states, with the orientation or posture of the foldable electronic device 2 fixed, according to an embodiment of the disclosure.

Referring to FIGS. 6, 7, and 8, when the foldable electronic device 2 transitions between the unfolded state and the folded state, a radiation pattern of the satellite communication antenna 461 may vary. When the foldable electronic device transitions among the unfolded state, intermediate state, and folded state, the electromagnetic influence on the satellite communication antenna 461 may vary, resulting in a change in the radiation pattern of the satellite communication antenna 461. When the foldable electronic device 2 transitions among the unfolded state, intermediate state, and folded state, the relative positions between the satellite communication antenna 461 and at least one component of the foldable electronic device 2 may vary, and the electromagnetic influence of the at least one component on the satellite communication antenna 461 may vary. At least one component that may have an electromagnetic influence on the satellite communication antenna 461 may include, for example, an electrical element, a conductive material, and/or a non-conductive material (e.g., dielectric). For example, in the folded state of the foldable electronic device 2, the second frame 22 may be aligned with the first frame 21 to overlap it, and may exert an electromagnetic influence on the satellite communication antenna 461 included in the first frame 21. For example, in the unfolded state of the foldable electronic device 2, the second frame 22 may be disposed parallel to the first frame 21, and may substantially not exert an electromagnetic influence on the satellite communication antenna 461 included in the first frame 21, or may exert less electromagnetic influence on the satellite communication antenna 461, compared to the folded state of the foldable electronic device 2.

According to an embodiment, the foldable electronic device 2 may have a first axis 61, a second axis 62, and a third axis 63 that are orthogonal to each other and maintained at a constant angle. Any one of the first axis 61, the second axis 62, and the third axis 63 may be arranged in the direction of gravity. The first axis 61, the second axis 62, and the third axis 63 are provided to the first housing 21 where the satellite communication antenna 461 is positioned, and may remain constant relative to the satellite communication antenna 461 even if the angle of the second housing 22 relative to the first housing 21 changes when the foldable electronic device 2 transitions among the unfolded, intermediate, and folded states. The foldable electronic device 2 may be configured to identify the rotation angle and the inclination of the foldable electronic device 2 relative to the first, second, and third axes 61, 62, and 63 in order to identify the orientation (or the posture) of the foldable electronic device 2.

According to an embodiment, the foldable electronic device 2 may include a gyro sensor accommodated in the first housing 21 where the satellite communication antenna 461 is positioned. The gyro sensor may have a first axis 61, a second axis 62, and a third axis 63. The foldable electronic device 2 may be configured to identify the orientation (or the posture) of the foldable electronic device 2 through the gyro sensor. The foldable electronic device 2 may be configured to identify changes in the orientation (or the posture) of the foldable electronic device 2 through the gyro sensor during transitions among the unfolded, intermediate, and folded states.

According to an embodiment, in the unfolded state of the foldable electronic device 2, a first radiation pattern 610 of the satellite communication antenna 461 may be provided (or formed). The first radiation pattern 610 may provide a substantially maximum radiation intensity in a first radiation direction (also referred to as a first peak radiation direction) 611 (or 620), based on the first axis 61, the second axis 62, and the third axis 63. For example, the first radiation pattern 610, based on the first axis 61, the second axis 62, and the third axis 63, may substantially radiate a relatively large amount of electromagnetic field energy (also referred to as radio wave energy) in the first radiation direction 611. In a case where the foldable electronic device 2 is configured to exchange electromagnetic field energy with the outside of the foldable electronic device 2 along the first radiation direction 611, radio transmission and reception performance may be substantially maximized.

According to an embodiment, in the folded state of the foldable electronic device 2, a second radiation pattern 710 of the satellite communication antenna 461, which is different from the first radiation pattern 610, may be provided (or formed). The second radiation pattern 710 may provide a substantially maximum radiation intensity in a second radiation direction (also referred to as a second peak radiation direction) 711 (or 720), based on the first axis 61, the second axis 62, and the third axis 63. For example, the second radiation pattern 710 may substantially radiate a relatively large amount of electromagnetic field energy (also referred to as radio wave energy) in the second radiation direction 711, based on the first axis 61, the second axis 62, and the third axis 63. In a case where the foldable electronic device 2 is configured to exchange electromagnetic field energy with the outside of the foldable electronic device 2 along the second radiation direction 711, radio transmission and reception performance may be substantially maximized.

According to an embodiment, graph 801 in FIG. 8 represents the antenna radiation performance of the satellite communication antenna 461 in the unfolded state of the foldable electronic device 2 with a fixed orientation (or posture) of the foldable electronic device 2. Graph 802 in FIG. 8 represents the antenna radiation performance of the satellite communication antenna 461 in the folded state of the foldable electronic device 2 with a fixed orientation (or posture) of the foldable electronic device 2. Since the first radiation pattern 611 of the satellite communication antenna 461 in the unfolded state of the foldable electronic device 2 is different from the second radiation pattern 711 of the satellite communication antenna 461 in the folded state of the foldable electronic device 2, there is a difference in the antenna radiation performance.

According to an embodiment, Table 1 shows radiation directions of radiation patterns of the satellite communication antenna 461 that vary depending on the angle between the first housing 21 and the second housing 22 of the foldable electronic device 2. The radiation direction is represented as a vector. For example, an angle of about 180 degrees between the first housing 21 and the second housing 22 may indicate the folded state of the foldable electronic device 2. For example, an angle of about 0 degrees to about 10 degrees between the first housing 21 and the second housing 22 may indicate the folded state of the foldable electronic device 2. Although not shown separately, the angle between the first housing 21 and the second housing 22 may vary, and the radiation direction of the radiation pattern may vary according thereto.

**[Table 1]**

| Angle | Radiation direction | | |
|---|---|---|---|
| | Coordinate values based on first axis 61 | Coordinate values based on second axis 62 | Coordinate values based on third axis 63 |
| About 180 degrees | 2.241845 | -0.664463 | 0.707107 |
| ... | | | |
| About 0 to about 10 degrees | -0.526541 | 0.368688 | 0.766044 |

According to an embodiment, a gyro sensor having the first, second, and third axes 61, 62, and 63 may be accommodated in the first housing 21 where the satellite communication antenna 461 is located, and the orientation (or posture) of the foldable electronic device 2 identified through the gyro sensor may be substantially interpreted as the orientation (or posture) of the first housing 21. For example, when the angle between the first housing 21 and the second housing 22 changes while the orientation (or posture) of the first housing 21 is fixed, the radiation direction of the satellite communication antenna 461 based on the first, second, and third axes 61, 62, and 63 changes. For example, when the foldable electronic device 2 are rotated while the angle between the first housing 21 and the second housing 22 is fixed, the radiation direction of the satellite communication antenna 461 based on the first, second, and third axes 61, 62, and 63 remains fixed, but the orientation (or posture) of the first housing 21 changes.

According to an embodiment, the foldable electronic device 2 may be configured to guide a user to adjust the orientation (or posture) of the foldable electronic device 2 so as to smoothly transmit and receive radio waves through a radiation pattern (or radiation direction) depending on the angle between the first housing 21 and the second housing 22. For example, in the unfolded state of the foldable electronic device 2, the foldable electronic device 2 may guide the user to adjust the orientation (or posture) of the foldable electronic device 2 so that the first radiation direction 611 of the first radiation pattern 610 is substantially oriented toward the satellite. For example, in the folded state of the foldable electronic device 2, the foldable electronic device 2 may guide the user to adjust the orientation (or posture) of the foldable electronic device 2 so that the second radiation direction 711 of the second radiation pattern 710 is substantially oriented toward the satellite.

According to various embodiments, the foldable electronic device 2 may be configured to guide the user to adjust the angle between the first housing 21 and the second housing 22 so as to smoothly transmit and receive radio waves through the radiation pattern of the satellite communication antenna 461. The foldable electronic device 2 may guide the user to adjust the angle between the first housing 21 and the second housing 22 to form, for example, a radiation pattern having a radiation direction substantially directed toward the satellite.

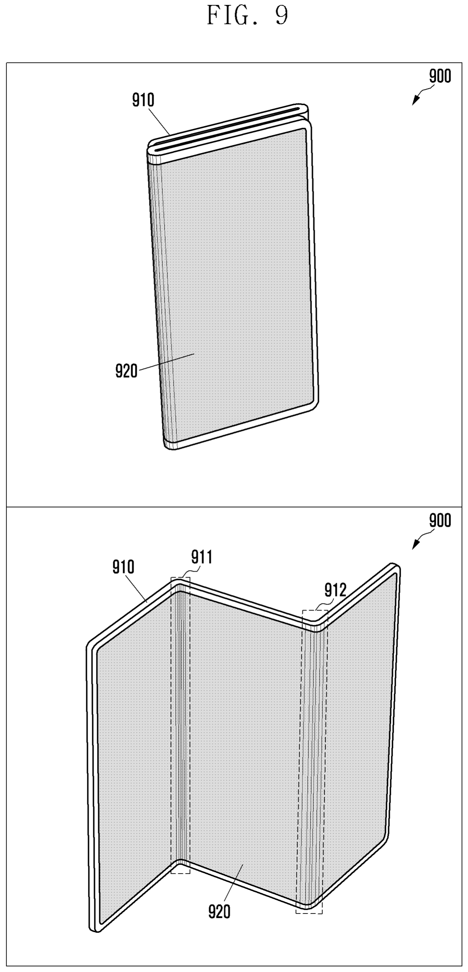

FIG. 9 shows a perspective view of a multi-foldable electronic device 900 in a folded state and a perspective view of a multi-foldable electronic device 900 in an intermediate state according to an embodiment of the disclosure. It should be understood that the disclosure implements and encompasses all combinations of the features and/or embodiments disclosed in relation to FIG. 9. That is, all combinations of the features described below in relation to FIG. 9 should be considered to be included in the disclosure as specific examples.

Referring to FIG. 9, a multi-foldable electronic device 900 may include a multi-foldable housing 910 and a flexible display (e.g., foldable display) 920.

According to an embodiment, the multi-foldable housing 910 may be implemented to be foldable by including multiple hinge portions. For example, the multi-foldable housing 910 may be a double foldable housing including two hinge portions 911 and 912, as shown in the drawing, but is not limited thereto.

According to an embodiment, the flexible display 920 may be disposed in the multi-foldable housing 910.

According to an embodiment, the multi-foldable electronic device 900 may include at least one satellite communication antenna (not separately illustrated). For example, the satellite communication antenna may be disposed or included in the multi-foldable housing 910 or accommodated inside the multi-foldable electronic device 900. Depending on the transformation pattern (also referred to as a variable state or deformation state) of the multi-foldable electronic device 900, the radiation pattern (or radiation direction) of the satellite communication antenna may vary.

According to an embodiment, the multi-foldable electronic device 900 may be configured to guide the user to adjust the orientation (or posture) of the multi-foldable electronic device 900 so as to smoothly transmit and receive radio waves through the radiation pattern (or radiation direction) of the satellite communication antenna according to the transformation pattern of the multi-foldable electronic device 900.

According to various embodiments, the multi-foldable electronic device 900 may be configured to guide the user to adjust the deformation of the multi-foldable electronic device 900 so as to smoothly transmit and receive radio waves through the radiation pattern of the satellite communication antenna.

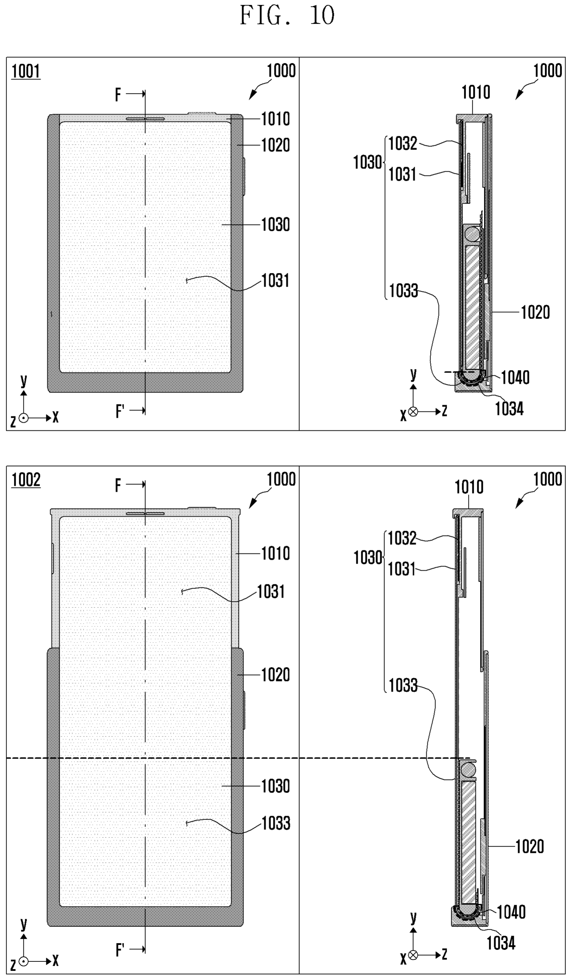

FIG. 10 illustrates a slidable electronic device (or stretchable electronic device or rollable electronic device) 1000 with a reduced screen (also referred to as a display area), a slidable electronic device 1000 with an expanded screen, a cross-sectional view of the slidable electronic device 1000 having the reduced screen taken along line F-F', and a cross-sectional view of the slidable electronic device 1000 having the expanded screen taken along line F-F' according to an embodiment of the disclosure. It should be understood that the disclosure implements and encompasses all combinations of the features and/or embodiments disclosed in relation to FIG. 10. That is, all combinations of the features described below in relation to FIG. 10 should be considered to be included in the disclosure as specific examples.

Referring to FIG. 10, a slidable electronic device 1000 may include a first housing 1010, a second housing 1020, and a flexible display (e.g., rollable display) 1030. 1001 refers to the slidable electronic device 1000 with its screen reduced. 1002 refers to the slidable electronic device 1000 with its screen expanded.

According to an embodiment, the first housing 1010 and the second housing 1020 may be slidably connected to each other.

According to an embodiment, the flexible display 1030 may include a first section 1031, a second section 1032, and a bendable section 1033. The first section 1031 and the second section 1032 of the flexible display 1030 may be disposed in the first housing 1010. The first housing 1010 may support the first section 1031 and the second section 1032. The bendable section 1033 of the flexible display 1030 may be configured to move by sliding the first housing 1010 relative to the second housing 1020. At least a portion of the bendable section 1033 may slide out from the interior of the slidable electronic device 1000 to be exposed to the exterior, or slide back into the interior of the slidable electronic device 1000 to be housed therein, depending on the sliding direction of the first housing 1010 relative to the second housing 1020. The bendable section 1033 of the flexible display 1030 may have a curved portion 1034 configured to move in different directions when it slides into the interior of the slidable electronic device 1000 or slides out to the exterior of the slidable electronic device 1000. The curved portion 1034 may be formed by being supported by, for example, a curved support surface 1040 or a curved member such as a roller. The position of the curved portion 1034 may change depending on the movement of the first housing 1010 relative to the second housing 1020.

According to an embodiment, the slidable electronic device 1000 may include at least one satellite communication antenna (not illustrated separately). For example, the satellite communication antenna may be positioned or included in the first housing 1010 or the second housing 1020, or accommodated inside the slidable electronic device 1000. Depending on the transformation pattern of the slidable electronic device 1000, the radiation pattern (or radiation direction) of the satellite communication antenna may vary.

According to an embodiment, the slidable electronic device 1000 may be configured to guide the user to adjust the orientation (or posture) of the slidable electronic device 1000 so as to smoothly transmit and receive radio waves through the radiation pattern (or radiation direction) of the satellite communication antenna according to the transformation pattern of the slidable electronic device 1000.

According to various embodiments, the slidable electronic device 1000 may be configured to guide the user to adjust the deformation of the slidable electronic device 1000 so as to smoothly transmit and receive radio waves through the radiation pattern of a satellite communication antenna.

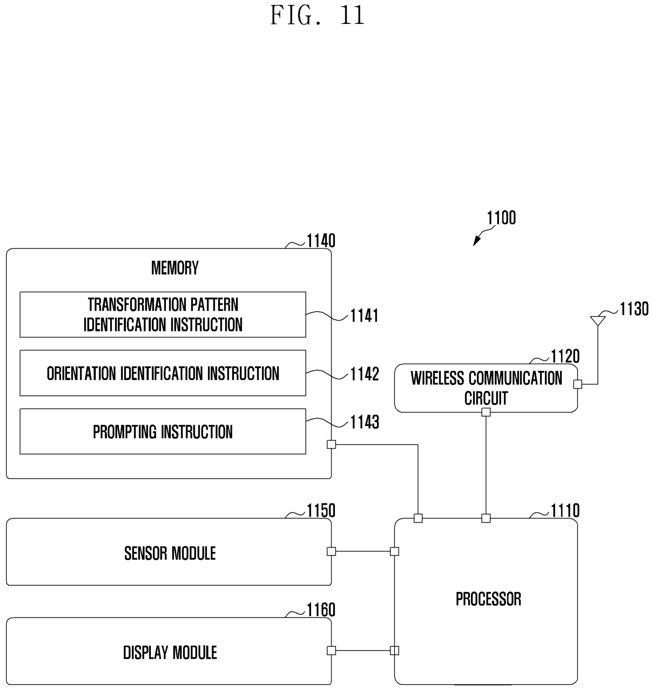

FIG. 11 is a block diagram of an electronic device 1100 according to an embodiment of the disclosure. It should be understood that the disclosure implements and encompasses all combinations of the features and/or embodiments disclosed in relation to FIG. 11. That is, all combinations of the features described below in relation to FIG. 11 should be considered to be included in the disclosure as specific examples.

Referring to FIG. 11, an electronic device 1100 may include a processor 1110 (e.g., the processor 120 in FIG. 1), a wireless communication circuit 1120 (e.g., the wireless communication module 192 in FIG. 1), a satellite communication antenna 1130 (e.g., the satellite communication antenna 461 in FIGS. 6 and 7), a memory 1140 (e.g., the memory 130 in FIG. 1), a sensor module 1150 (e.g., the sensor module 176 in FIG. 1), and/or at least one display module 1160 (e.g., the display module 160 in FIG. 1). The electronic device 1100 may be, for example, the foldable electronic device 2 in FIG. 2, the multi-foldable electronic device 900 in FIG. 9, or the slidable electronic device 1000 in FIG. 10.

According to an embodiment, the processor 1110 may control multiple hardware components connected to the processor 1110 by executing an operating system (OS) or embedded software programs. For example, the processor 1110 may control multiple hardware components according to instructions (e.g., the program 140 in FIG. 1) stored in the memory 1140.

According to an embodiment, the wireless communication circuit 1120 may be configured to transmit and/or receive signals in a satellite communication band through the satellite communication antenna 1130.

According to an embodiment, the satellite communication antenna 1130 may be disposed or included in a variable housing (not separately illustrated) that provides (or forms) at least a portion of the exterior of the electronic device 1100, or may be accommodated inside the electronic device 1100. When the state (e.g., shape) of the electronic device 1100 changes, the electromagnetic influence on the satellite communication antenna 1130 changes, which may result in a change in the radiation pattern (or radiation direction) of the satellite communication antenna 1130. When the state of the electronic device 1100 changes, the relative positions between the satellite communication antenna 1130 and at least one component (e.g., an electrical element, a conductive material, and/or a non-conductive material (e.g., dielectric)) of the electronic device 1100 may vary, so that the electromagnetic influence of the at least one component on the satellite communication antenna 1130 may change.

According to an embodiment, the memory 1140 may store various data used by at least one component (e.g., the processor 1130 or the sensor module 1150) of the electronic device 1100. The various data may include, for example, software (e.g., the program 140 in FIG. 1) and input or output data for commands related thereto.

According to an embodiment, the sensor module 1150 may detect a transformation pattern (or variable state) of the electronic device 1100, an operating state (e.g., power or temperature) of the electronic device 1100, and/or an external environmental state (e.g., user state), and generate an electrical signal or data value corresponding to the detected state. In various embodiments, the sensor module 1150 may further include at least one control circuit for controlling at least one sensor included therein.

According to an embodiment, at least one display module 1160 may include a flexible display that may be deformed in response to the transformation pattern of the electronic device 1100, and/or another display positioned differently from the flexible display. In various embodiments, at least one display module 1160 may further include at least one control circuit for controlling the flexible display.

According to an embodiment, the memory 1140 may store transformation pattern identification instructions (also referred to as variable state identification instructions) 1141, orientation (or posture) identification instructions 1142, and prompting instructions 1143.

According to an embodiment, the transformation pattern identification instructions 1141 may include instructions for causing the processor 1110 to identify a transformation pattern of the electronic device 1100 through the sensor module 1150.

According to an embodiment, since the radiation direction (or radiation pattern) of the satellite communication antenna 1130 varies depending on the transformation pattern of the electronic device 1100, as described with reference to FIGS. 6, 7, and Table 1, the transformation pattern identification instruction 1141 may be interpreted as causing the processor 1110 to identify the radiation direction of the satellite communication antenna 1130 depending on the transformation pattern of the electronic device 1100. Information (e.g., see Table 1) regarding the radiation direction of the satellite communication antenna 1130 depending on the transformation pattern of the electronic device 1100 may be stored in the memory 1140, and the processor 1110 may identify the radiation direction of the satellite communication antenna 1130 depending on the transformation pattern of the electronic device 1100 from the information.

According to an embodiment, the orientation (or posture) identification instructions 1142 may include instructions that cause the processor 1110 to identify the orientation (or posture) of the electronic device 1100 through the sensor module 1150.

According to an embodiment, the prompting instructions 1143 may include instructions that cause the processor 1100 to provide prompting to guide the user to adjust the orientation (or posture) of the electronic device 1100, based on the transformation pattern of the electronic device 1100 and the orientation of the electronic device 1100, so as to smoothly transmit and receive radio waves through the radiation pattern (or radiation direction) of the satellite communication antenna 1130 according to the transformation pattern of the electronic device 1100.

According to an embodiment, the prompting instructions 1143 may be interpreted as including an instruction that causes the processor 1110 to identify the radiation direction of the satellite communication antenna 1130 depending on the transformation pattern of the electronic device 1100 from information stored in the memory 1140, and an instruction that causes the processor 1110 to provide prompting to guide the user to adjust the orientation (or posture) of the electronic device 1100, based on the radiation direction of the satellite communication antenna 1130 and the orientation of the electronic device 1100.

According to various embodiments, the processor 1110 may include a first processor area (not separately illustrated) configured to perform functions or operations related to the transformation pattern identification instructions 1141. The transformation pattern identification instructions 1141 may be excluded from the memory 1140.

According to various embodiments, the processor 1110 may include a second processor area (not illustrated separately) configured to perform functions or operations related to the orientation identification instructions 1142. The orientation identification instructions 1142 may be excluded from the memory 1140.

According to various embodiments, the processor 1110 may include a third processor area (not illustrated separately) configured to perform functions or operations related to the prompting instructions 1143. The prompting instructions 1143 may be excluded from the memory 1140.

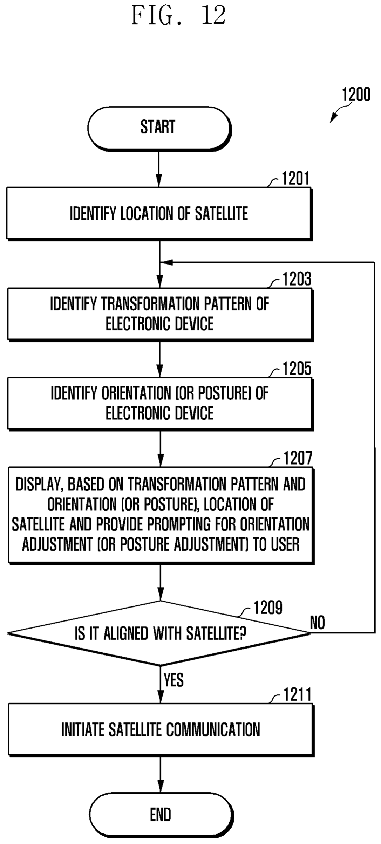

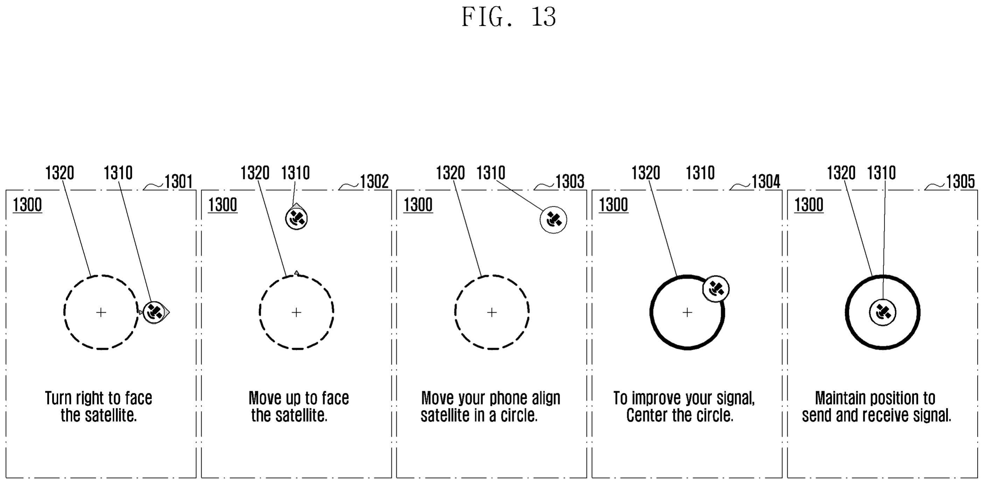

FIG. 12 illustrates an operational flow 1200 of the electronic device 1100 in FIG. 11 according to an embodiment of the disclosure. FIG. 13 illustrates a screen of an electronic device 1100 in relation to the operational flow 1200 in FIG. 12 according to an embodiment of the disclosure.

Referring to FIGS. 11 and 12, in operation 1201, the processor 1110 may be configured to identify the location of a satellite. For example, information regarding the satellite's location may be obtained from an external server. According to an embodiment, the processor 1110 may be configured to receive (or acquire) information regarding the satellite's location from the outside (e.g., a server) and calculate the satellite's location.

According to an embodiment, in operation 1203, the processor 1110 may be configured to identify a transformation pattern (or variable state) of the electronic device 1100. The processor 1110 may identify the transformation pattern of the electronic device 1100 through the sensor module 1150.

According to an embodiment, since the radiation direction (or radiation pattern) of the satellite communication antenna 1130 varies depending on the transformation pattern of the electronic device 1100, as described with reference to FIGS. 6, 7, and Table 1, operation 1203 may be interpreted as identifying the radiation direction (or radiation pattern) of the satellite communication antenna 1130 depending on the transformation pattern of the electronic device 1100.

According to an embodiment, in operation 1205, the processor 1110 may be configured to identify an orientation (or posture) of the electronic device 1100. The processor 1110 may determine the orientation (or posture) of the electronic device 1100 through the sensor module 1150.

According to an embodiment, in operation 1207, the processor 1110 may be configured to display, based on the transformation pattern of the electronic device 1100 and the orientation (or posture) of the electronic device 1100, the location of a satellite and provide prompting for orientation adjustment (or posture adjustment) of the electronic device 1100 to the user.

According to an embodiment, operation 1207 may be interpreted as identifying the radiation direction of the satellite communication antenna 1130 depending on the transformation pattern of the electronic device 1100 from information stored in the memory 1140, displaying the location of a satellite, based on the radiation direction of the satellite communication antenna 1130 and the orientation of the electronic device 1100, and providing prompting for orientation adjustment (or posture adjustment) of the electronic device 1100 to the user.

According to an embodiment, in operation 1207, the processor 1110 may display, through at least one display module 1160 included in the electronic device 1100, a user interface (UI) that prompts the user to adjust the orientation of the electronic device 1100 so that the radiation direction of the satellite communication antenna 1130 is oriented toward the satellite, based on the radiation direction of the satellite communication antenna 1130 and the orientation of the electronic device 1100.

Referring to FIGS. 11 and 13, the processor 1110 may display the location of the satellite and provide the user with prompting for orientation adjustment (or posture adjustment) of the electronic device 1100 through a screen (also referred to as a display area) 1300 provided by at least one display module 1160. Based on the prompting, the position on the screen 1300 where the satellite's location is displayed may be determined based on the transformation pattern of the electronic device 1100 and the orientation (or posture) of the electronic device 1100. For example, as shown in examples 1301, 1302, 1303, 1304, and 1305, the position of the icon 1310 indicating the satellite may vary on the screen 1300 depending on the combination of the transformation pattern of the electronic device 1100 and the orientation (or posture) of the electronic device 1100. If at least one of the transformation pattern of the electronic device 1100 and the orientation (or posture) of the electronic device 1100 changes, the position of the icon 1310 indicating the satellite may vary on the screen 1300. Based on the prompting, an area such as a circle 1320 may be displayed at a designated position on the screen 1300. The prompting may guide the user to adjust the orientation (or posture) of the electronic device 1100 so that the position of the icon 1310 indicating the satellite is positioned within the circle 1320. For example, if the user rotates the electronic device 1100, the combination of the transformation pattern of the electronic device 1100 and the orientation (or posture) of the electronic device 1100 may change, and accordingly, the position of the icon 1310 indicating the satellite relative to the circle 1320 on the screen 1300 may vary on the screen 1300. The prompting may display a message that assists in adjusting the orientation (or posture) of the electronic device 1100 such that the position of the icon 1310 indicating the satellite is positioned within the circle 1320, as in 1301, 1302, 1303, and 1304. The position of the icon 1310 indicating the satellite being positioned within the circle 1320 (see 1305) may indicate a state in which the orientation (or posture) of the electronic device 1100 has been adjusted such that the radiation direction of the radiation pattern formed through the satellite communication antenna 1130 in the transformation pattern of the electronic device 1100 is substantially directed toward the satellite.

According to an embodiment, in operation 1209, the processor 1110 may identify whether the satellite communication antenna 1130 and the satellite are aligned. The alignment of the satellite communication antenna 1130 and the satellite may indicate that the radiation direction of the satellite communication antenna 1130 is substantially oriented toward the satellite. When the orientation (or posture) of the electronic device 1100 is adjusted by the user so that the position of the icon 1310 indicating the satellite is positioned within the circle 1320, the radiation direction of the satellite communication antenna 1130 may substantially be oriented toward the satellite. When the orientation (or posture) of the electronic device 1100 is adjusted so that the position of the icon 1310 indicating the satellite is positioned within the circle 1320, the prompting may display a message asking the user to maintain the orientation (or posture) of the electronic device 1100.

According to an embodiment, if it is identified in operation 1209 that the satellite communication antenna 1130 and the satellite are aligned, the processor 1110 may be configured to cause the wireless communication circuit 1120 to initiate satellite communication through the satellite communication antenna 1130 in operation 1213.

According to an embodiment, if it is identified in operation 1209 that the satellite communication antenna 1130 and the satellite are not aligned, the processor 1110 may be configured to re-perform operation 1203 and operations subsequent thereto.

According to an embodiment, the electronic device 1100 may be the foldable electronic device 2 in FIG. 2. The transformation pattern identification instruction 1141 stored in the memory 1140 in FIG. 11 may include instructions that cause the processor of the foldable electronic device 2 to identify the angle between the first housing 21 and the second housing 22. In the operational flow 1200 in FIG. 12, operation 1203 may be for the processor 1110 of the foldable electronic device 2 to identify the angle between the first housing 21 and the second housing 22. In the operational flow 1200 in FIG. 12, operation 1207 may be for the processor of the foldable electronic device 2 to display the location of a satellite, based on the angle between the first housing 21 and the second housing 22 and the orientation (or posture) of the foldable electronic device 2, and provide prompting for orientation adjustment (or posture adjustment) of the foldable electronic device 2 to the user.

According to an embodiment, in the foldable electronic device 2 in FIG. 2, the radiation direction of the satellite communication antenna 461 (see FIGS. 6 and 7) based on the first, second, and third axes 61, 62, and 63 (see FIGS. 6 and 7) depends on the angle between the first housing 21 and the second housing 22. The operation of the processor identifying the angle between the first housing 21 and the second housing 22 (e.g., operation 1203) may be interpreted or replaced with an operation of the processor identifying the radiation direction of the satellite communication antenna 461. The operation (e.g., operation 1207) of the processor displaying the location of a satellite and providing prompting for orientation adjustment (or posture adjustment) of the foldable electronic device 2 to the user, based on the angle between the first housing 21 and the second housing 22 and the orientation (or posture) of the foldable electronic device 2, may be interpreted or replaced with an operation of the processor displaying the location of a satellite and providing prompting for orientation adjustment (or posture adjustment) of the foldable electronic device 2 to the user, based on the radiation direction of the satellite communication antenna 461 and the orientation (or posture) of the foldable electronic device 2. In an embodiment, information (e.g., see Table 1) including radiation directions depending on the angle between the first housing 21 and the second housing 22 may be pre-stored in the memory (e.g., the memory 1140 in FIG. 11) of the foldable electronic device 2. The processor may be configured to identify the angle between the first housing 21 and the second housing 22, and identify a radiation direction according to the identified angle, based on the information stored in the memory.

According to an embodiment, since the angle between the first housing 21 and the second housing 22 substantially represents the radiation direction of the satellite communication antenna 461 relative to the first, second, and third axes 61, 62, and 63, when the processor is configured to identify the angle between the first housing 21 and the second housing 22 in the operational flow 1200, information (e.g., see Table 1) including the radiation directions depending on the angle between the first housing 21 and the second housing 22 may not be stored in the memory (e.g., the memory 130 in FIG. 1) of the foldable electronic device 2.

According to an embodiment, referring to FIGS. 2 and 3, since the display area 250 of the first display module 25 is not exposed to the outside in the folded state of the foldable electronic device 2, operation 1207 of the foldable electronic device 2 in the operational flow 1200 shown in FIG. 12 may be configured to select a first display module (also referred to as a first display) 25 or a second display module (also referred to as a second display) 26 to provide prompting depending on the angle between the first housing 21 and the second housing 22.

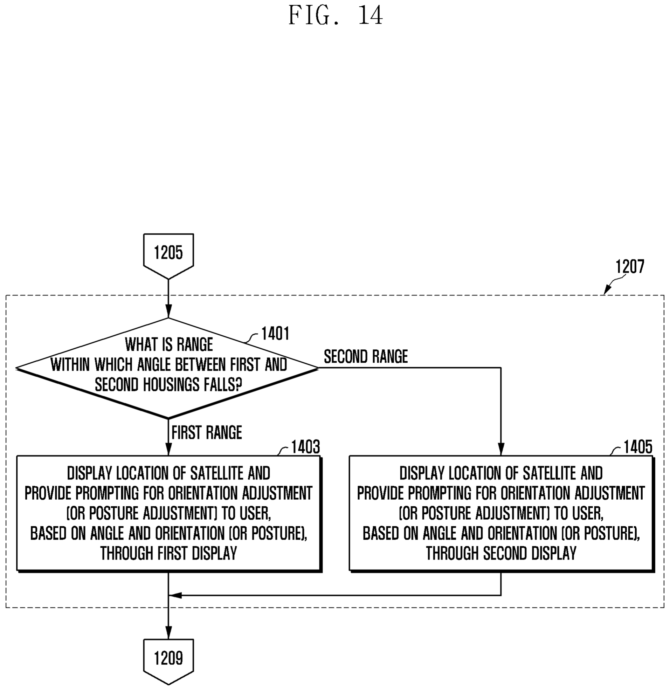

FIG. 14 illustrates an operational flow of operation 1207 in the operational flow 1200 shown in FIG. 12 in the foldable electronic device 2 according to an embodiment of the disclosure.

Referring to FIGS. 2 and 14, in operation 1401, a processor (e.g., the processor 1110 in FIG. 11) may be configured to identify a range within which the angle between the first housing 21 and the second housing 22 falls. If it is identified that the range within which the angle between the first housing 21 and the second housing 22 falls is a first range, the processor may perform operation 1403. If it is identified that the range within which the angle between the first housing 21 and the second housing 22 falls is a second range, the processor may perform operation 1405.

According to an embodiment, in operation 1403, the processor may be configured to display the location of a satellite and provide prompting for orientation adjustment (or posture adjustment) to the user, based on the angle between the first housing 21 and the second housing 22 and the orientation (or posture) of the foldable electronic device 2, through the first display (e.g., the first display module 25 in FIG. 2). For example, as shown in FIG. 13, the processor may provide, through the first display, prompting to guide the user so that the radiation direction of the satellite communication antenna 461 (see FIG. 5) is substantially oriented toward the satellite.

According to an embodiment, in operation 1405, the processor may be configured to display the location of a satellite and provide prompting for orientation adjustment (or posture adjustment) to the user, based on the angle between the first housing 21 and the second housing 22 and the orientation (or posture) of the foldable electronic device 2, through the second display (e.g., the second display module 26 in FIG. 2). For example, as shown in FIG. 13, the processor may provide, through the first display, prompting to guide the user so that the radiation direction of the satellite communication antenna 461 (see FIG. 5) is substantially oriented toward the satellite.

According to an embodiment, based on user experience, the first range may be an angular range in which the user may comfortably use the first display (e.g., the first display module 25 in FIG. 2), and the second range may be an angular range in which the user may inconveniently use the first display. For example, the first range may include a first angle (e.g., approximately 180 degrees) of the unfolded state of the foldable electronic device 2 to a second angle in an intermediate state of the foldable electronic device 2. For example, the second range may include a second angle in the intermediate state of the foldable electronic device 2 to a third angle (e.g., approximately 0 degrees to approximately 10 degrees) in the folded state of the foldable electronic device 2. The second angle may be, for example, approximately 90 degrees based on user experience, but is not limited thereto. The first range may be interpreted as a usage environment in which the user is more likely to utilize the first display than the second display. The second range may be interpreted as a situation in which the user is more likely to utilize the second display (e.g., the second display module 26 in FIG. 2) than the first display.

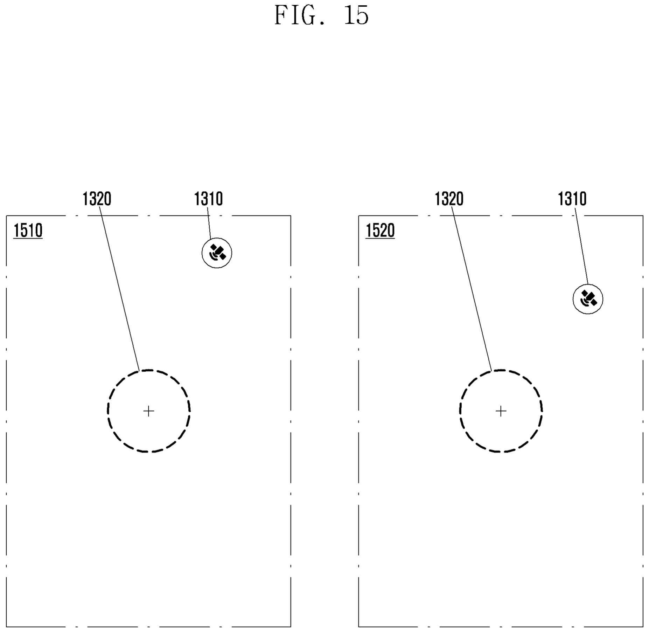

FIG. 15 illustrates a screen of a foldable electronic device 2 according to an embodiment of the disclosure.

Referring to FIG. 15, 1510 refers to a screen provided by the second display module 26 (see FIG. 3) when the foldable electronic device 2 is in the folded state while the orientation (or posture) of the foldable electronic device 2 is substantially fixed. 1520 refers to a screen provided by the first display module 25 (see FIG. 2) when the foldable electronic device 2 is in the unfolded state while the orientation (or posture) of the foldable electronic device 2 is substantially fixed.

According to an embodiment, when the foldable electronic device 2 transitions from the folded state to the unfolded state or vice versa while the orientation (or posture) of the foldable electronic device 2 is substantially fixed, the radiation direction of the satellite communication antenna 461 (see FIGS. 6 and 7) changes, so that the user may experience a change in the relative position of the icon 1310 with respect to a designated area (e.g., the circle 1320) on the screen.

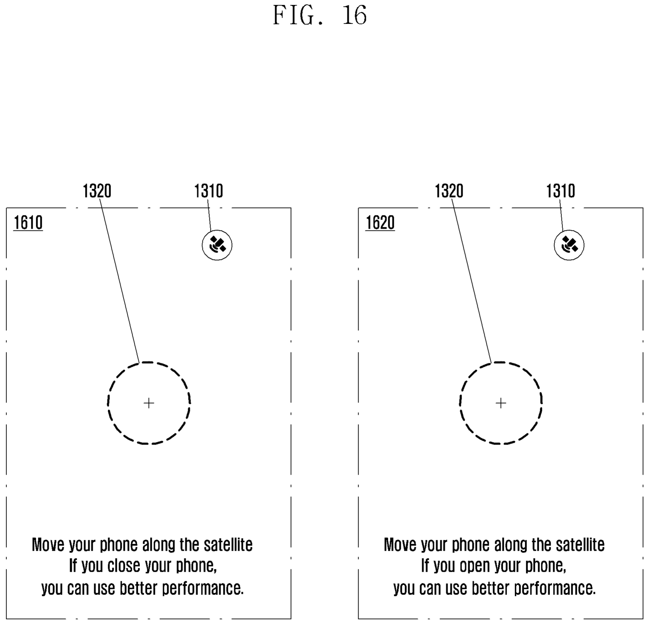

FIG. 16 illustrates a screen of the foldable electronic device 2 according to an embodiment of the disclosure.

Referring to FIG. 16, 1610 refers to a screen provided by the first display module 25 (see FIG. 2) in the unfolded state of the foldable electronic device 2. 1620 refers to a screen provided by the second display module 26 (see FIG. 3) in the folded state of the foldable electronic device 2.

According to an embodiment, due to the position of the satellite, it may be more advantageous for the foldable electronic device 2 to transition to the folded state than to stay in the unfolded state in order to orient the radiation direction of the satellite communication antenna 461 (see FIG. 5) toward the satellite. Due to the position of the satellite, it may be more advantageous for the foldable electronic device 2 to transition to the unfolded state than to stay in the folded state on order to orient the radiation direction of the satellite communication antenna 461 (see FIG. 5) toward the satellite. The foldable electronic device 2 may be configured to provide a user with prompting to guide the user to adjust the angle between the first housing 21 and the second housing 22 so as to smoothly transmit and receive radio waves through the radiation pattern of the satellite communication antenna 461. For example, in the foldable electronic device 2, operation 1204 in FIG. 12 may be configured so that the processor provides the user with prompting for adjusting the angle between the first and second housings 21 and 22, based on the location of a satellite, the angle between the first and second housings 21 and 22, and the orientation (or posture) of the foldable electronic device 2. For example, in the foldable electronic device 2, operation 1204 in FIG. 12 may be configured so that the processor provides the user with prompting for transition of the foldable electronic device 2 from the unfolded state to the folded state, or from the folded state to the unfolded state, based on the location of a satellite, the angle between the first and second housings 21 and 22, and the orientation (or posture) of the foldable electronic device 2 (see FIG. 16).

According to an exemplary embodiment of the disclosure, an electronic device 1100 includes an antenna (e.g., the satellite communication antenna 1130), a wireless communication circuit 1120, at least one display (e.g., at least one display module 1160), and/or a processor 1110. The wireless communication circuit 1120 may be configured to communicate with a satellite through the antenna. The processor 1110 may be configured to display the location of a satellite on at least one display, based on a transformation pattern of the electronic device 1100 and an orientation of the electronic device 1100.

According to an exemplary embodiment of the disclosure, the processor 1110 may be configured to provide, through at least one display (e.g., at least one display module 1160), prompting for the user to adjust the orientation of the electronic device, based on a transformation pattern of the electronic device 1100 and the orientation of the electronic device, so that a radiation direction of the antenna 1130 is oriented toward the satellite.

According to an exemplary embodiment of the disclosure, the processor 1110 may be configured to provide, through at least one display (e.g., at least one display module 1160), prompting for the user to adjust the transformation pattern of the electronic device, based on the transformation pattern of the electronic device 1100 and the orientation of the electronic device, so that the radiation direction of the antenna 1130 is oriented toward the satellite.

According to an exemplary embodiment of the disclosure, the electronic device 1100 may be a foldable electronic device 2. The foldable electronic device 2 may include a foldable housing 20 in which a first housing 21 and a second housing 21 are hingedly connected. At least one display (e.g., at least one display module 1160) may include a first flexible display (e.g., the first display module 25) extending from the first housing 21 to the second housing 22, and a second display (e.g., the second display module 26) disposed on a side of the foldable housing 20 opposite to the first display. The transformation pattern of the electronic device may include an angle between the first housing 21 and the second housing 21. The processor 1110 may be configured to display the location of a satellite on the first display or the second display, based on the angle between the first and second housings 21 and 22 and the orientation of the foldable electronic device 2.

According to an exemplary embodiment of the disclosure, the processor 1110 may be configured to display the location of a satellite on the first display (e.g., the first display module 25) in a case where the angle between the first and second housings 21 and 22 falls within a first range. The processor 1110 may be configured to display the location of a satellite on the second display (e.g., the second display module 26) in a case where the angle between the first and second housings 21 and 22 falls within a second range.

According to an exemplary embodiment of the disclosure, the processor 1110 may be configured to display the location of a satellite at a first position on the first display (e.g., the first display module 25) in a case where the angle between the first and second housings 21 and 22 is a first angle included in a first range. The processor 1110 may be configured to display the location of a satellite at a second position on the first display in a case where the angle between the first and second housings 21 and 22 is a second angle included in the first range.

According to an exemplary embodiment of the disclosure, the processor 1110 may be configured to display the location of a satellite at a first position on the second display (e.g., the second display module 26) in a case where the angle between the first and second housings 21 and 22 is a first angle included in a second range. The processor 1110 may be configured to display the location of a satellite at a second position on the second display in a case where the angle between the first and second housings 21 and 22 is a second angle included in a second range.

According to an exemplary embodiment of the disclosure, the antenna (e.g., the satellite communication antenna 461) may be positioned in the first housing 21. The processor 1110 may be configured to identify the angle between the first and second housings 21 and 22 and the orientation of the foldable electronic device 2 through the sensor module 1150 accommodated in the first housing 21.

According to an exemplary embodiment of the disclosure, the electronic device 1100 may be a multi-foldable electronic device 900 configured such that at least one display (e.g., at least one display module 1160) is folded at least twice.

According to an exemplary embodiment of the disclosure, the electronic device 1100 may be a slidable electronic device 1000. The slidable electronic device 1000 may include a first housing 1010 and a second housing 1020 that are connected to be slidable relative to each other. At least one display (e.g., at least one display module 1160) may include a flexible display 1030 configured to move by sliding between the first housing 1010 and the second housing 1020. The transformation pattern of the electronic device may include a relative position between the first housing 1010 and the second housing 1020. The processor 1110 may be configured to display the location of a satellite on the flexible display 1030, based on the relative position between the first and second housings 1010 and 1020 and the orientation of the slidable electronic device 1000.

According to an exemplary embodiment of the disclosure, the foldable electronic device 2 may include a foldable housing 20, a first flexible display (e.g., the first display module 25), a second display (e.g., the second display module 26), an antenna (e.g., the satellite communication antenna 461), a wireless communication circuit 1120, and/or a processor 1110. The foldable housing 20 may include a first housing 21 and a second housing 22, and the first housing 21 and the second housing 22 may be configured to be hingedly connected. The first display may extend from the first housing 21 to the second housing 22. The second display may be positioned on a side of the foldable housing 20 opposite to the first display. The antenna may be positioned or accommodated in the foldable housing 20. The wireless communication circuit 1120 may be configured to communicate with a satellite through the antenna. The processor may be configured to display the location of a satellite on the first display or the second display, based on the angle between the first housing 21 and the second housing 22 and the orientation of the foldable electronic device 2.

According to an exemplary embodiment of the disclosure, the processor 1110 may be configured to display the location of a satellite on the first display (e.g., the first display module 25) in a case where the angle between the first and second housings 21 and 22 falls within a first range. The processor 1110 may be configured to display the location of a satellite on the second display (e.g., the second display module 26) in a case where the angle between the first and second housings 21 and 22 falls within a second range.

According to an exemplary embodiment of the disclosure, the processor 1110 may be configured to display the location of a satellite at a first position on the first display (e.g., the first display module 25) in a case where the angle between the first and second housings 21 and 22 is a first angle included in a first range. The processor 1110 may be configured to display the location of a satellite at a second position on the first display in a case where the angle between the first and second housings 21 and 22 is a second angle included in the first range.

According to an exemplary embodiment of the disclosure, the processor 1110 may be configured to display the location of a satellite at a first position on the second display (e.g., the second display module 26) in a case where the angle between the first and second housings 21 and 22 is a first angle included in a second range. The processor 1110 may be configured to display the location of a satellite at a second position on the second display in a case where the angle between the first and second housings 21 and 22 is a second angle included in the second range.

According to an exemplary embodiment of the disclosure, the processor 1110 may be configured to provide, through the first display (e.g., the first display module 25) or the second display (e.g., the second display module 26), prompting for the user to adjust the angle between the first and second housings 21 and 22 or the orientation of the electronic device, based on the angle between the first and second housings 21 and 22 and the orientation of the foldable electronic device 2, so that the radiation direction of the antenna 1130 is oriented toward the satellite.

According to an exemplary embodiment of the disclosure, a foldable electronic device 2 includes a foldable housing 20, a first display (e.g., the first display module 25), a second display (e.g., the second display module 26), an antenna (e.g., the satellite communication antenna 461), a wireless communication circuit 1120, a memory 1140, at least one sensor (e.g., the sensor module 1150), and a processor 1110. The foldable housing 20 includes a first housing 21 and a second housing 22 that are hingedly connected. The first display and the second display are disposed on the opposite sides of the foldable housing 20 relative to each other. The wireless communication circuit 1120 is configured to communicate with a satellite through the antenna. The memory 1140 stores an instruction that, when executed, causes the processor 1110 to identify an angle between the first housing 21 and the second housing 22 through at least one sensor. The memory 1140 stores an instruction that, when executed, causes the processor 1110 to identify a radiation direction of the antenna according to the angle between the first and second housings 21 and 22 from information stored in the memory 1140. The memory 1140 stores an instruction that, when executed, causes the processor 1110 to identify an orientation of the foldable electronic device 2 through at least one sensor. The memory 1140 stores an instruction that, when executed, causes the processor 1110 to display, through the first display or the second display, a UI that prompts the user to adjust the orientation of the foldable electronic device 2, based on the radiation direction of the antenna and the orientation of the foldable electronic device 2, so that the radiation direction is oriented toward the satellite.

According to an exemplary embodiment of the disclosure, the memory 1140 may store an instruction that, when executed, causes the processor 1110 to display a UI through the first display (e.g., the first display module 25) in a case where the angle between the first and second housings 21 and 22 falls within a first range. The memory 1140 may store an instruction that, when executed, causes the processor 1110 to display a UI through a second display (e.g., the second display module 26) in a case where the angle between the first and second housings 21 and 22 falls within a second range.

According to an exemplary embodiment of the disclosure, the memory 1140 may store an instruction that, when executed, causes the processor 1110 to identify the location of a satellite, based on information received (or acquired) from the outside. The memory 1140 may store an instruction that, when executed, causes the processor 1110 to display a designated area (e.g., the circle 1320) on the first display (e.g., the first display module 25) or the second display (e.g., the second display module 26). The memory 1140 may store an instruction that, when executed, causes the processor 1110 to display the location of a satellite as an icon 1310 on the first display or the second display, based on the radiation direction of the antenna (e.g., the satellite communication antenna 461) and the orientation of the foldable electronic device 2. The memory 1140 may store an instruction that, when executed, causes the processor 1110 to display a UI that prompts the user to adjust the orientation of the foldable electronic device 2 so that the icon 1310 moves to a designated area (e.g., the circle 1320) in response to the radiation direction of the antenna (e.g., the satellite communication antenna 461) being oriented toward the satellite. The position at which the icon 1310 is displayed on the first display or the second display may vary depending on the radiation direction of the antenna and the orientation of the foldable electronic device 2.

According to an exemplary embodiment of the disclosure, memory 1140 may store an instruction that, when executed, causes the processor 1110 to initiate communication with the satellite through the wireless communication circuit 1120 when the radiation direction of the antenna (e.g., the satellite communication antenna 461) is identified to be oriented toward the satellite.

According to an exemplary embodiment of the disclosure, an electronic device 1100 includes an antenna (e.g., the satellite communication antenna 1130), a wireless communication circuit 1120, a memory 1140, at least one sensor (e.g., the sensor module 1150), at least one display (e.g., at least one display module 1160), and a processor 1110. The wireless communication circuit 1120 is configured to communicate with the satellite via the antenna. The memory 1140 stores an instruction that, when executed, causes the processor 1110 to identify a transformation pattern (or variable state) of the electronic device 1100 through at least one sensor. The memory 1140 stores an instruction that, when executed, causes the processor 1110 to identify a radiation direction of the antenna depending on the transformation pattern of the electronic device 1100 from information stored in the memory 1140. The memory 1140 stores an instruction that, when executed, causes the processor 1110 to identify the orientation of the electronic device 1100 through at least one sensor. The memory 1140 stores an instruction that, when executed, causes the processor 1110 to display, through at least one display, a UI that prompts the user to adjust the orientation, based on the radiation direction of the antenna and the orientation of the electronic device 1100, so that the radiation direction is oriented toward the satellite.

According to an exemplary embodiment of the disclosure, the memory 1140 may store an instruction that, when executed, causes the processor 1110 to identify the location of a satellite, based on information received (or acquired) from the outside. The memory 1140 may store an instruction that, when executed, causes the processor 1110 to display a designated area (e.g., the circle 1320) on at least one display (e.g., at least one display module 1160). The memory 1140 may store an instruction that, when executed, causes the processor 1110 to display the location of a satellite as an icon 1310 on at least one display, based on the radiation direction of the antenna (e.g., the satellite communication antenna 1130) and the orientation of the electronic device 1100, and display a UI that prompts the user to adjust the orientation of the electronic device 1100 so that the icon 1310 moves to the designated area (e.g., the circle 1320). The position at which the icon 1310 is displayed on at least one display may vary depending on the radiation direction of the antenna and the orientation of the electronic device 1100. When the icon 1310 is positioned in a designated area, the radiation direction of the antenna (e.g., the satellite communication antenna 1130) may be oriented toward the satellite.

According to an exemplary embodiment of the disclosure, the memory 1140 may store an instruction that, when executed, causes the processor 1110 to cause the wireless communication circuit 1120 to initiate communication with the satellite through the antenna 1130 when the radiation direction of the antenna (e.g., the satellite communication antenna 1130) is identified to be oriented toward the satellite.

According to an exemplary embodiment of the disclosure, the electronic device 1100 may be a foldable electronic device 2. The foldable electronic device 2 may include a foldable housing 20 in which a first housing 21 and a second housing 21 are hingedly connected. At least one display (e.g., at least one display module 1160) may include a first display (e.g., the first display module 25) extending from the first housing 21 to the second housing 22, and a second display (e.g., the second display module 26) positioned on a side of the foldable housing 20 opposite to the first display. The transformation pattern (or variable state) of the electronic device may include an angle between the first housing 21 and the second housing 21.

According to an exemplary embodiment of the disclosure, the memory 1140 may store an instruction that, when executed, causes the processor 1110 to display a UI through the first display (e.g., the first display module 25) in a case where the angle between the first and second housings 21 and 22 falls within a first range. The memory 1140 may store an instruction that, when executed, causes the processor 1110 to display a UI through the second display (e.g., the second display module 26) in a case where the angle between the first and second housings 21 and 22 falls within a second range.

According to an exemplary embodiment of the disclosure, the electronic device 1100 may be a multi-foldable electronic device 900 configured such that at least one display (e.g., at least one display module 1160) is foldable at least twice.

According to an exemplary embodiment of the disclosure, the electronic device 1100 may be a slidable electronic device 1000. The slidable electronic device 1000 may include a first housing 1010 and a second housing 1020 that are connected to be slidable relative to each other. At least one display (e.g., at least one display module 1160) may include a flexible display 1030 configured to move by sliding between the first housing 1010 and the second housing 1020. The transformation pattern (or variable state) of the electronic device may include a relative position between the first housing 1010 and the second housing 1020.

The embodiments disclosed in the disclosure and drawings are merely presented as specific examples to more easily explain the technical concept and facilitate understanding of the disclosure, and are not intended to limit the scope of the disclosure. Therefore, the scope of various embodiments of the disclosure should be construed as encompassing variations or modifications in addition to those disclosed herein. Additionally, it should be understood that any embodiment(s) described herein may be used in conjunction with any other embodiment(s) described herein. In particular, although the disclosure provides multiple embodiments defining multiple features, respectively, it should be emphasized that some of these embodiments are connected only with reference to the same drawing or drawings. The disclosure should be understood to encompass all combinations of these embodiments, unless there is a clear contradiction between two (or more) embodiments. That is, in a case where features are presented as optional in the disclosure, all combinations of such optional features are included in the disclosure.

## Claims

1. A foldable electronic device (2) comprising:
a foldable housing (20) in which a first housing (21) and a second housing (22) are hingedly connected;
a first display (25) and a second display (26) positioned on opposite sides of the foldable housing (20) to each other;
an antenna (461);
a wireless communication circuit (1120) configured to communicate with a satellite through the antenna (461);
a memory (1140); and
at least one sensor (1150), and
a processor (1110),
wherein the memory (1140) is configured to store instructions that, when executed, cause the processor (1110) to:
identify an angle between the first housing (21) and the second housing (22) through the at least one sensor (1150);
identify a radiation direction of the antenna (461) depending on the angle from information stored in the memory (1140);
identify an orientation of the foldable electronic device (2) through the at least one sensor (1150); and
display, through the first display (25) or the second display (26), a user interface (UI) that prompts a user to adjust the orientation, based on the radiation direction and the orientation, so that the radiation direction is oriented toward the satellite.

2. The foldable electronic device of claim 2,
wherein the memory (1140) is configured to store instructions that, when executed, cause the processor (1110) to:
display the UIthrough the first display (25) in a case where the angle between the first and second housings (21 and 22) falls within a first range; and
display the UI through the second display (26) in a case where the angle between the first and second housings (21 and 22) falls within a second range.

3. The foldable electronic device of claim 1 or 2,
wherein the memory (1140) is configured to store instructions that, when executed, cause the processor (1110) to:
identify a location of the satellite, based on information received from the outside;
display a designated area (1320) on the first display (25) or the second display (26);
display the location of the satellite as an icon (1310) on the first display (25) or the second display (26), based on the radiation direction and the orientation; and
display the UI that prompts the user to adjust the orientation so that the icon (1310) moves to the designated area (1320) corresponding to the radiation direction being oriented toward the satellite, and
wherein the position at which the icon (1310) is displayed on the first display (25) or the second display (26) varies depending on the radiation direction and the orientation.

4. The electronic device of any one of claims 1 to 3,
wherein the memory (1140) is configured to store an instruction that, when executed, causes the processor (1110) to
control the wireless communication circuit (1120) to initiate communication with the satellite through the antenna (1130) in a case where the radiation direction is identified to be oriented toward the satellite.

5. An electronic device comprising:
an antenna (1130);
a wireless communication circuit (1120) configured to communicate with a satellite through the antenna (1130);
a memory (1140);
at least one sensor (1150);
at least one display (1160); and
a processor (1110),
wherein the memory (1140) is configured to store instructions that, when executed, cause the processor (1110) to:
identify a variable state of the electronic device (1100) through the at least one sensor (1150);
identify a radiation direction of the antenna (1130) depending on the variable state from information stored in the memory (1140);
identify an orientation of the electronic device (1100) through the at least one sensor (1150); and
display, through the at least one display (1160), a UI that prompts a user to adjust the orientation, based on the radiation direction and the orientation, so that the radiation direction is oriented toward the satellite.

6. The electronic device of claim 5,
wherein the memory (1140) is configured to store instructions that, when executed, cause the processor (1110) to:
identify a location of a satellite, based on information received from the outside;
display a designated area (1320) on the at least one display (1160); and
display the location of a satellite as an icon (1310) on the at least one display (1160), based on the radiation direction and the orientation, and display the UI that prompts the user to adjust the orientation so that the icon (1310) moves to the designated area (1320),
wherein the position at which the icon (1310) is displayed on the at least one display (1160) varies depending on the radiation direction and the orientation, and
wherein, when the icon (1310) is positioned in the designated area (1320), the radiation direction is oriented toward the satellite.

7. The electronic device of claim 5 or 6,
wherein the memory (1140) is configured to store an instruction that, when executed, causes the processor (1110) to
control the wireless communication circuit (1120) to initiate communication with the satellite through the antenna (1130) in a case where the radiation direction is identified to be oriented toward the satellite.

8. The electronic device of any one of claims 5 to 7,
wherein the electronic device is a foldable electronic device (2),
wherein the foldable electronic device (2) comprises a foldable housing (20) in which a first housing (21) and a second housing (21) are hingedly connected,
wherein the at least one display (1160) comprises a first display (25) extending from the first housing (21) to the second housing (22), and a second display (26) disposed on a side of the foldable housing (20) opposite to the first display (25), and
wherein the variable state of the electronic device comprises an angle between the first housing (21) and the second housing (21).

9. The electronic device of claim 8,
wherein the memory (1140) is configured to store instructions that, when executed, cause the processor (1110) to:
display the UIthrough the first display (25) in a case where the angle between the first and second housings (21 and 22) falls within a first range; and
display the UI through the second display (26) in a case where the angle between the first and second housings (21 and 22) falls within a second range.

10. The electronic device of any one of claims 5 to 8,
wherein the electronic device is a multi-foldable electronic device (900) configured such that the at least one display (1160) is foldable at least twice.

11. The electronic device of any one of claims 5 to 8,
wherein the electronic device is a slidable electronic device (1000),
wherein the slidable electronic device (1000) comprises a first housing 1010 and a second housing (1020) that are connected to be slidable relative to each other,
wherein the at least one display comprises a flexible display (1030) configured to move according to sliding between the first housing (1010) and the second housing (1020), and
wherein the variable state of the electronic device comprises a relative position between the first housing (1010) and the second housing (1020).
